# EUROPEAN PATENT APPLICATION

(11) **EP 1 347 385 A1**
(43) Date of publication of application: **24.09.2003**
(21) Application number: 01272895.2
(22) Date of filing: 27.12.2001
(51) Int. Cl.: G06F 13/00

(54) **INFORMATION PROCESSING SYSTEM**

(30) Priority: 28.12.2000 JP 2000402583
(71) Applicant: MATSUSHITA ELECTRIC INDUSTRIAL CO., LTD., Kadoma-shi, Osaka 571-8501 (JP)
(72) Inventor: SAKATA, Tsuyoshi, Asahi-ku, Yokohama-shi, Kanagawa 241-081 (JP); ITO, Hayashi, Matsudo-shi, Chiba 271-0045 (JP); MATSUURA, Shun, Suginami-ku, Tokyo 166-0014 (JP); KOBAYAKAWA, Yuichi, Ota-ku, Tokyo 144-0046 (JP)
(74) Representative: Betten & Resch
(86) International application number: JP0111531
(87) International publication number: WO02054254

(57) **Abstract**

In order to receive network connection service, a user needs to configure communication information by himself/herself to a terminal, which the user himself/herself uses, whose procedure has been complicated. On the other hand, it is difficult to ensure the security of the terminal device if the connection from a connection service company by remote processing is permitted without limits. A network connection service company such as an Internet service provider communicates communication information, which is allocated to each terminal device, to an exclusive server of a communication configuration and administration company, and the exclusive server is designed to configure the communication information of each terminal device by the remote processing.

## Description

### BACKGROUNG OF THE INVENTION

### Technical Field

The present invention relates to a method and apparatus for connecting an electronic device to another electronic device on a network.

### Prior Art

The number of the Internet users has grown explosively in recent years. The masses, when they generally use the Internet, subscribe to an Internet Service Provider (ISP) with a relatively low cost compared to a leased line.

In this case, a remote computer (server) that the Internet service provider has is directly connected to the Internet, and each user needs to configure communication information of a terminal device for connecting to the server.

An example of a flow of configuring the communication information is shown. The user firstly uses a telephone line and the terminal device provided with a modem or the like capable of connecting to the line, and connects it to a server exclusively for service subscription procedure of an Internet service provider which is previously set to the terminal device. The user configures an e-mail account, enters the name, the address, and the telephone number of the user, a deposit account number of bank for the payment of service charge, a credit card number, a password, and the like through two-way communication with the server exclusively for subscription procedure. When the input is completed, the user obtains the telephone number of an access point, the connection ID of the provider, and the like to temporarily receive an Internet connection service immediately.

However, a period where the temporary connection (referred to as provisional connection) can be performed is limited, and connection information for regular connection is sent by mail or the like later. In the connection information, a telephone number list of access points, the connection ID for the regular connection, the IP address of a DNS server (domain name server), information specifying a mail address and its server, information specifying the news server, the password for access, and the like are described. Then, the user sets the communication information in his/her terminal device to end the provisional connection service based on the information, and proceeds to the regular service. Configuring the communication information is configuring the modem, configuring a dialup network, configuring mail transmission software, or the like.

In the above-described procedure, the user had to configure the communication information by himself/herself to the terminal that he/she uses in order to receive services from the Internet service provider via the regular connection, whose procedure was complicated.

This becomes a serious problem as the number of users having little knowledge of communication increases with the increase of population using the Internet.

Further, to solve this problem, a system such as the provisional connection before starting the service via regular connection with the Internet service provider could be used for configuring the communication information of regular connection. Specifically, it is a method of configuring the communication information of the terminal device through a remote processing by the server of a company that provides the communication service.

However, in order to configure the communication information of the regular connection of each user's terminal device by the remote processing while using the provisional connection from the Internet service provider, re-configuration of the terminal device is required, and a function is required to prevent unauthorized access, unauthorized reconfiguration and the like for the terminal device itself. On the other hand, it is too much trouble to prepare a large number of programs to accept safely and surely the communication information corresponding to each of the large number of Internet service providers. That is, it is too much trouble to deal with each of the increasing number of Internet service providers.

### SUMMARY OF THE INVENTION

To solve these problems, in the present invention, an apparatus and method for safely and surely configuring communication information with the server for regular connection through remote processing are provided for the terminal device used by the user.

In more detail, a network connection service company such as the Internet service provider transmits the communication information once, which is allocated for each terminal device, to an exclusive server of a communication configuration and administration company, and the exclusive server is designed to perform the configuration of the communication information in each terminal device through the remote processing. Herein, the exclusive serve of the communication configuration and administration company refers to a server that is permitted to reconfigure the terminal device regardless of the brand of terminal device.

### BRIEF DESCRIPTION OF THE DRAWINGS

Fig. 1 is a conceptual view of a first embodiment of the present invention.
Fig. 2 is a view showing the processing flow of the first embodiment of the present invention.
Fig. 3 is a view showing another processing flow of the first embodiment of the present invention.
Fig. 4 is a functional block diagram of the terminal device of the first embodiment of the present invention.
Fig. 5 is a processing flowchart of the terminal device of the first embodiment of the present invention.
Fig. 6 is a functional block diagram of another terminal device of the first embodiment of the present invention.
Fig. 7 is a flowchart of another terminal device of the first embodiment of the present invention.
Fig. 8 is a functional block diagram of still another terminal device of the first embodiment of the present invention.
Fig. 9 is a functional block diagram of a first server of the first embodiment of the present invention.
Fig. 10 is a functional block diagram of a second server of the first embodiment of the present invention.
Fig. 11 is a flowchart of the terminal device, the first server, and the second server of the first embodiment of the present invention.
Fig. 12 is a flowchart of a data processing system of the first embodiment of the present invention.
Fig. 13 is a view showing the entire concept of a second embodiment of the present invention.
Fig. 14 is a view showing the processing flow of the first embodiment of the second embodiment of the present invention.
Fig. 15 is a functional block diagram of a terminal device of the second embodiment of the present invention.
Fig. 16 is a functional block diagram of a first server of the second embodiment of the present invention.
Fig. 17 is a functional block diagram of a second server of the second embodiment of the present invention.
Fig. 18 is a flowchart of a data processing system of the second embodiment of the present invention.
Fig. 19 is the entire functional block diagram of the data processing system of the first embodiment of the present invention.
Fig. 20 is a flowchart showing the entire processing flow of the second embodiment of the present invention.
Fig. 21 is a flowchart showing the processing flow of authentication for terminal device of the present invention.
Fig. 22 is a terminal device according to the authentication for terminal device of the present invention.
Fig. 23 is a first server according to the authentication for terminal device of the present invention.
Fig. 24 is a second server according to the authentication for terminal device of the present invention.
Fig. 25 is a view showing the concept of a third embodiment of the present invention.
Fig. 26 is a functional block diagram of the third embodiment of the present invention.
Fig. 27 is a view showing more specifically the concept of the third embodiment of the present invention.
Fig. 28 is a flowchart showing the processing flow of the third embodiment of the present invention.
Fig. 29 is a functional block diagram of a fifth embodiment of the present invention.
Fig. 30 is a view showing the concept of a sixth embodiment of the present invention.
Fig. 31 is a flowchart showing the processing flow of the sixth embodiment of the present invention.
Fig. 32 is a functional block diagram of a ninth embodiment of the present invention.
Fig. 33 is a view showing the inclusive relation of an order in the ninth embodiment of the present invention.
Fig. 34 is a view showing the concept of a tenth embodiment of the present invention.
Fig. 35 is a flowchart showing the processing flow of the tenth embodiment of the present invention.
Fig. 36 is a flowchart showing the processing flow of an eleventh embodiment of the present invention.
Fig. 37 is a view showing the concept of a twelfth embodiment of the present invention.
Fig. 38 is a view showing the concept of the twelfth embodiment of the present invention.
Fig. 39 is a flowchart showing the processing flow of the twelfth embodiment of the present invention.

### DETAILED DESCRIPTION OF THE PREFERRED EMBODIMENTS

The preferred embodiments of the present invention will be described below.

In this specification, the 'terminal device' is an electronic device connected to the network, which refers to any device that requires communication information for the configuring of a communication connection with a particular server. Therefore, the terminal device includes a personal computer, a PDA, a cell phone, a PHS, a laptop personal computer, a server newly connected to the network, a router, a digital TV, a set-top box for digital TV, an electrical home appliance having a communication function (a refrigerator, a lighting fixture, a cooking device such as an microwave oven, an audio apparatus, a video device, for example), a home server, or a navigation system used in a mobile vehicle such as an automobile.

The 'first server' refers to a server administered by a business institution that provides the network connection service such as an Internet service unless otherwise stated, which has a provisional connection function and a regular connection function. The 'provisional connection' is a connection used when obtaining information necessary for the regular connection from the terminal device. The 'regular connection' refers to a connection to regularly receive the network connection service such as the Internet. It is to be noted that, even when the provisional connection function and the regular connection function are separated in different servers, a plurality of the servers having the functions are collectively referred to as the first server.

The 'second server' refers to a server that is permitted to directly write to a terminal the communication information, which is used for configuring the regular connection with the first server, to the terminal that tries to use the network connection service such as the Internet unless otherwise stated. In addition, even if the server does not directly write the information, it also refers to a server in which the communication information passed to a terminal device is written in the terminal device itself by the terminal device. The second server does not necessarily refer to only one server, but may include a plurality of servers.

The 'communication information' is information used to regularly connect the terminal device to the first server. More specifically, the communication information refers to a connection ID allocated by (a company or the like that administers) the first server for identifying the terminal device that desires the regular connection, a telephone number of an access point for connecting to the first server via a telephone line, an IP address of a domain name server, information (such as ' PPP ' and 'SLIP') for specifying a protocol when starting the connection, information for specifying a protocol (such as 'TCP/IP' and 'netBEUI') used in communication, or the like. Note that, unless otherwise stated in this specification, the content of the communication information that is generated in the first server of the Internet service provider or the like and passed to the second server and the content of the communication information that the second server passes to the terminal device do not need to be the same. This is because the second server, which has received the communication information generated by the first server, processes the communication information by correction, addition, partial deletion, or the like of the communication information to make it be communication information to be passed to the terminal device.

The first embodiment is the case where the Internet service provider or the like directly transmits the communication information of terminal device allocated to the user's terminal device to a server such as a so-called communication configuration and administration company that is permitted to configure the user's terminal device.

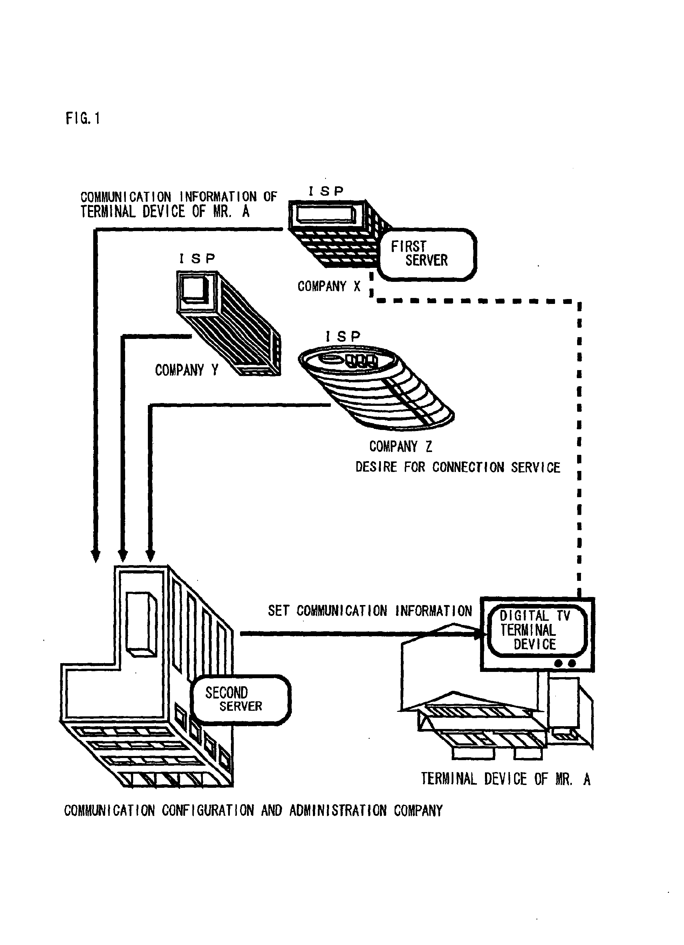

Fig. 1 is a conceptual diagram showing this embodiment. An example of the use of this embodiment is as follows. Mr. A selected company X as the Internet service provider (ISP) out of companies X, Y, and Z. Company X receives information from Mr. A for generating or determining the communication information. The communication information is transmitted to the second server of the communication configuration and administration company, and it configures the communication of the terminal device of Mr. A through the remote processing via a communication line or the like.

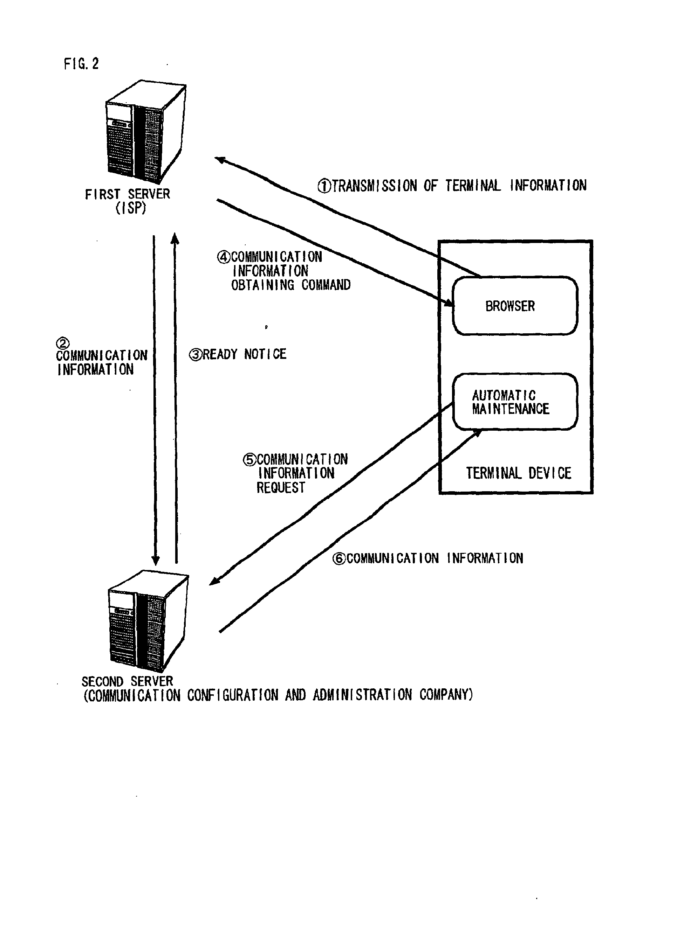

Fig. 2 describes the processing in further detail. It is assumed that Mr. A wants to connect the digital TV controlled by himself to the first server that company X administers, and receive the Internet service. Mr. A passes information for identifying the terminal, information for identifying a subscriber, and information necessary for procedure to receive financial consideration for service (such as the deposit account number of bank, the credit card number and its password) to company X by a dialog mode through the first server using the provisional connection or the like (procedure 1).

company X, based on the information, determines or automatically generates the communication information for connecting to the first server that company X administers, and communicates the communication information to the second server of the communication configuration and administration company or the like (procedure 2). This is performed for example, by using a browser or the like prepared in the terminal device. This is because there is no need to write to a non-volatile memory for the terminal device.

Configuration necessary for regularly connecting to the first server is performed using the communication information from the second server of the communication configuration and administration company or the like to the digital TV that is the terminal device of Mr. A with use of a communication line (procedure 6). Since this configuration includes the writing to the non-volatile memory for the terminal device itself, an exclusive program having a reliable automatic maintenance function should be used. The program is preferably installed in the terminal device before shipment. The program may, of course, be installed after shipment. The second server may initiate the communication between the second server and the terminal device, which is used for the configuration necessary for the regular connection, or it may be performed based on a request from the terminal device.

When it is performed based on the request from the terminal device, the state where second server has become capable of configuring the communication of regular connection to the terminal device, or a command that a request for configuring the communication information should be made to the second server is transmitted to the terminal device via the first server or the like of company X (procedure 3, procedure 4), and the terminal device requests configuration using the communication information for the second server based on the notice (procedure 5). Because the configuring or the communication information for configuring is always performed by the server of the communication configuration and administration company, the terminal device may only prepare a program corresponding to the transmission of communication information from the second server of the communication configuration and administration company. Accordingly, there is no need to prepare various kinds of programs corresponding to transmission from many servers of many service providers. This allows the structure of the terminal device to be simple, and also leads to increased reliability and cost reduction of the terminal device.

When the configuration is complete, Mr. A can connect to the Internet via the first server administered by company X. Note that Mr. A who uses and controls the terminal by the automatic setting function is freed from the configuring of communication information done by highly specialized settings and manipulators. Therefore, it is possible that Mr. A easily receives the network connection service even if he is not well-versed in communication technology.

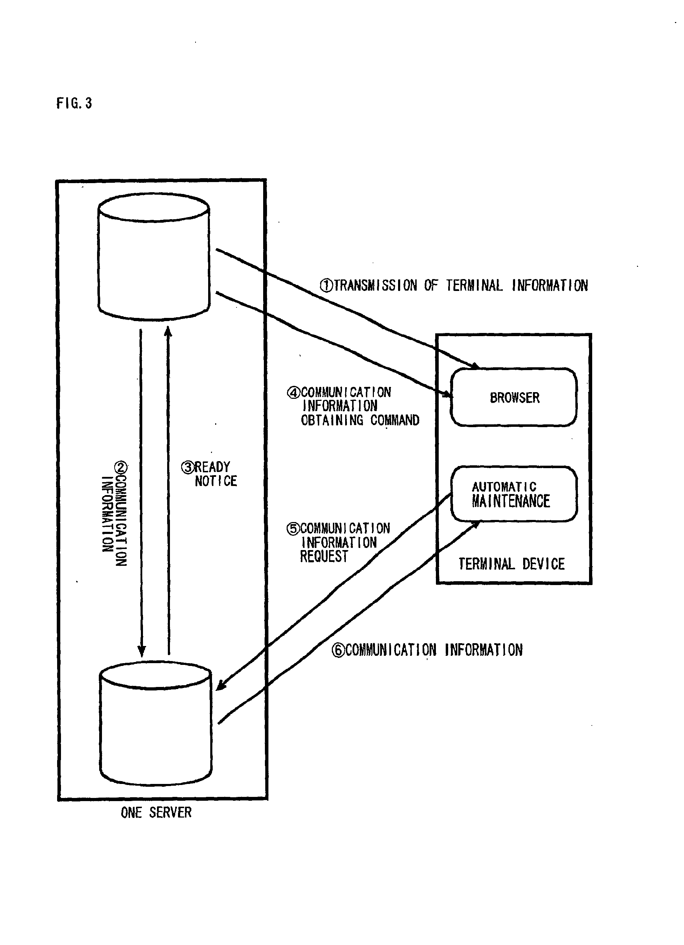

Fig. 3 is the view showing the case where the function of first server and the function of second server operate in the same apparatus. The basic processing flow is the same as the one shown in Fig. 2. The effects of this embodiment are not degraded at all in this case as well. Although it has been described that the communication information was generated based on the terminal information, it may not necessarily be generated based on the terminal information. In this case, the first server previously stores the communication information, and when it is necessary to communicate the communication information to the second server, the information is selected from the stored information and communicated to the second server.

Next, the terminal device of the first embodiment will be described.

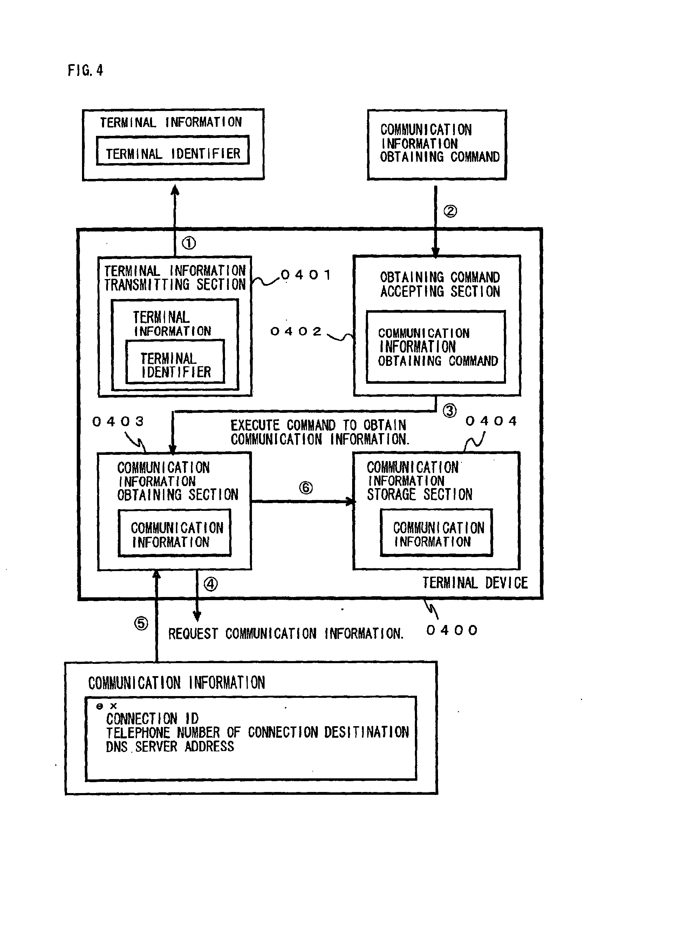

Fig. 4 is the view showing the functional block diagram of the terminal device of this embodiment. As shown in Fig. 4, a terminal device 0400 used in this embodiment has a terminal information transmitting section 0401, an obtaining order accepting section 0402, a communication information obtaining section 0403, and a communication information storage section 0404.

The terminal information transmitting section 0401 transmits terminal information having a terminal identifier that identifies the terminal device 0400 (procedure 1) . Herein, the 'terminal identifier' is various kinds of information for discriminating the terminal device from other terminal devices, which corresponds to a terminal ID, a user's address and name, information for payment of financial consideration for service (bank deposit account number, credit card number and password), or the like, for example. Such information is used to generate or determine the communication information. Further, the terminal information may include information regarding the types of the terminal device, the operating system used in the terminal device, the storage capacity and the processing capability of the terminal device, or the like. To generate communication information using these kinds of information includes determining a protocol when providing the communication information according to the type of terminal device, or the like, in addition to selecting the telephone number of the most suitable access point based on the address, for example.

The obtaining command accepting section 0402 accepts a communication information obtaining command, which is a command to obtain communication information to communicate with the first server, (procedure 2). The 'communication information obtaining command' is a command to make the second server start processing to configure the communication information through the remote processing. For example, it is an activating command to a program for the above-described automatic maintenance (procedure 3).

The 'automatic maintenance' refers to a program module or the like that automatically communicates to the second server when activated and requests that the communication information be communicated. The program module also functions to obtain the communication information from the second server and perform various kinds of configuring of the terminal device for the communication with the first server. In the example of Fig. 4, the communication information obtaining section serves to work as a part of the automatic maintenance function.

The communication information obtaining section 0403 executes the communication information obtaining order accepted by the obtaining command accepting section 0402, and obtains the communication information from the second server (procedure 5) . Herein, the communication information includes the connection ID, the telephone number of a connection destination, the IP address of a DNS server (domain name server) , and the like as described above.

The communication information storage section 0404 stores the communication information obtained by the communication information obtaining section 0403. To 'store' means to store information in a non-volatile storage section or the like. As an example, recording in a hard disk unit, an EPROM unit, a DVD unit, or the like can be cited. Further, to 'store' does not only mean to simply copy the obtained communication information into the non-volatile storage section but also include to implement it on the configuring of a modem or a dial-up network or a module for other connections as the case may be (procedure 6). Note that a configuration where the information is written in a volatile storage section is also effective. In this case, the configuration is deleted every time a power source is cut off, but it is advantageous that the authorization of terminal device connecting to the network can be checked every time because the communication information is stored in every connection.

Note that the first server and the second server may be the same as described above.

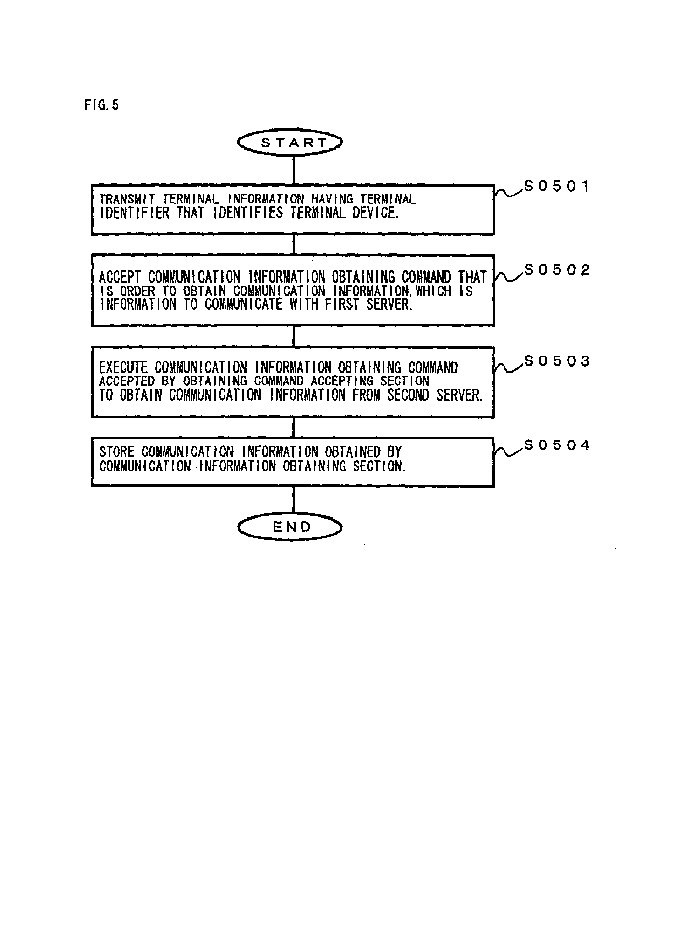

Fig. 5 is the view showing the processing flow in the terminal device of this embodiment. As shown in the drawing, the terminal information having the terminal identifier for identifying the terminal device is transmitted (step 50501). Next, the communication information obtaining command that is an order to obtain the communication information, which is information to communicate with the first server, is accepted (step S0502). Then, the communication information obtaining command accepted by the obtaining command accepting section is executed to obtain the communication information from the second server (step S0503). Further, the communication information obtained by the communication information obtaining section is stored (step S0504) to end the processing. A storage medium recording a series of such processing in a computer-executable manner is used, and a function to perform a series of processing can be realized in the terminal device (computer).

A terminal device in which an additional function has been implemented in the above-described terminal device will be described.

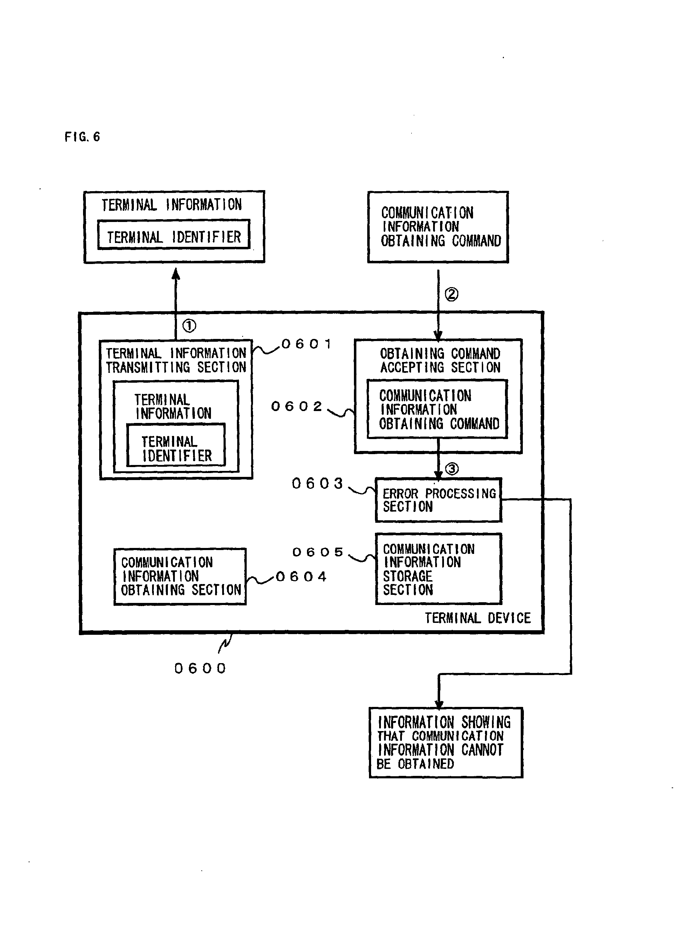

What is shown in Fig. 6, when the communication information obtaining command accepted by the obtaining command accepting section is information showing that it is impossible to obtain the communication information, is a terminal device 0600 that further comprises an error processing section that outputs or stores the information showing that it is impossible to obtain the communication information.

The basic configuration is basically the same as the one shown in Fig. 4. It has a terminal information transmitting section 0601, an obtaining command accepting section 0602, a communication information obtaining section 0604, and a communication information storage section 0605. What is additional is that the one in this embodiment further has an error processing section 0603, which is characterized in that the error processing section 0603 indicates to the user who controls the terminal that the communication information obtaining command shows that the communication information cannot be obtained.

This is used for the case where a credit card number entered as the terminal information is invalid, for example. This is because the Internet service provider that administers the first server cannot access the financial consideration for the connection service if the credit card number is invalid, and cannot configure communication with the first server.

To 'output' includes the case of outputting information on a display, the case of outputting it to a printer, the case of outputting it to another terminal device, and the like. Further, it also includes the case of outputting information to be displayed on them and printed. To 'store information showing that the communication information cannot be obtained' means that the terminal or the like stores the information. For example, it means to store information in a primary memory of the terminal device or to store it in the non-volatile storage section (not shown) such as the hard disk unit of the terminal device.

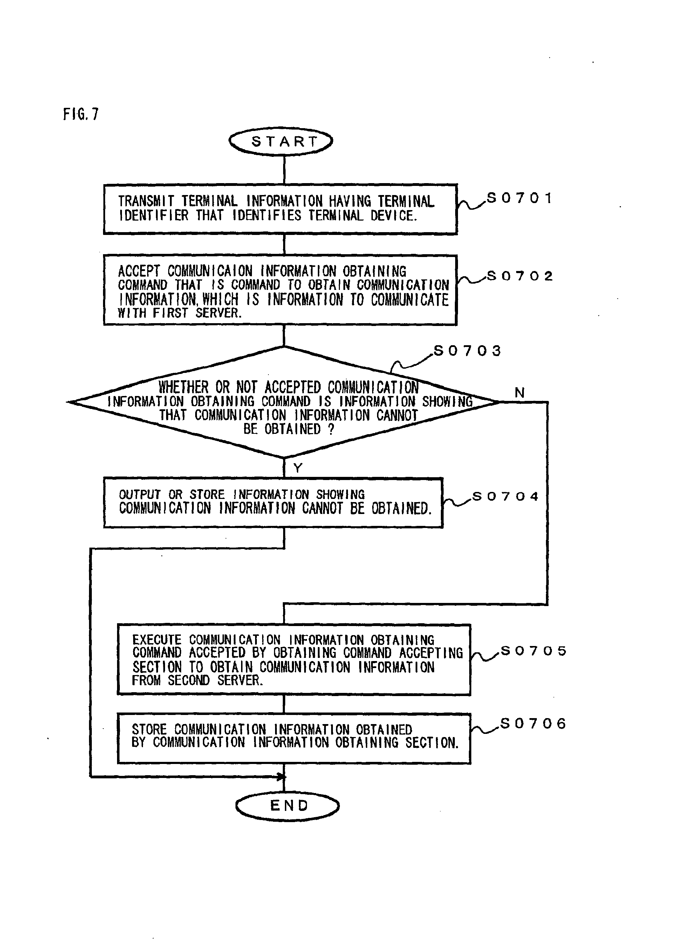

Fig. 7 is the view showing the processing flow of this embodiment. As shown in the drawing, the terminal information having the terminal identifier for identifying the terminal device is transmitted (step S0701). Next, the communication information obtaining command that is a command to obtain the communication information, which is information to communicate with the first server, is accepted (step S0702) . Then, whether the accepted communication information obtaining command is the information showing the communication information cannot be obtained or not (step S0703). When it is the information showing the communication information cannot be obtained as a result of the determination, the information showing the communication information cannot be obtained is either output or stored (step S0704) to end the processing. Otherwise, the communication information obtaining command accepted by the obtaining command accepting section is executed to obtain the communication information from the second server (step S0705) , and the communication information obtained by the communication information obtaining section is stored (step 50706) to end the processing.

Furthermore, using the terminal devices 1 and 2 as basics will be described, in which the communication information obtaining section is separated into first processing means and second processing means, the first processing means is configured so that it functions to obtain communication destination information and is not allowed to write in the non-volatile storage section, and the second means is configured so that it obtains communication information.

Since the basic configuration is the same as the terminal device 1 and the terminal device 2 of the above-described embodiment, only differences will be described.

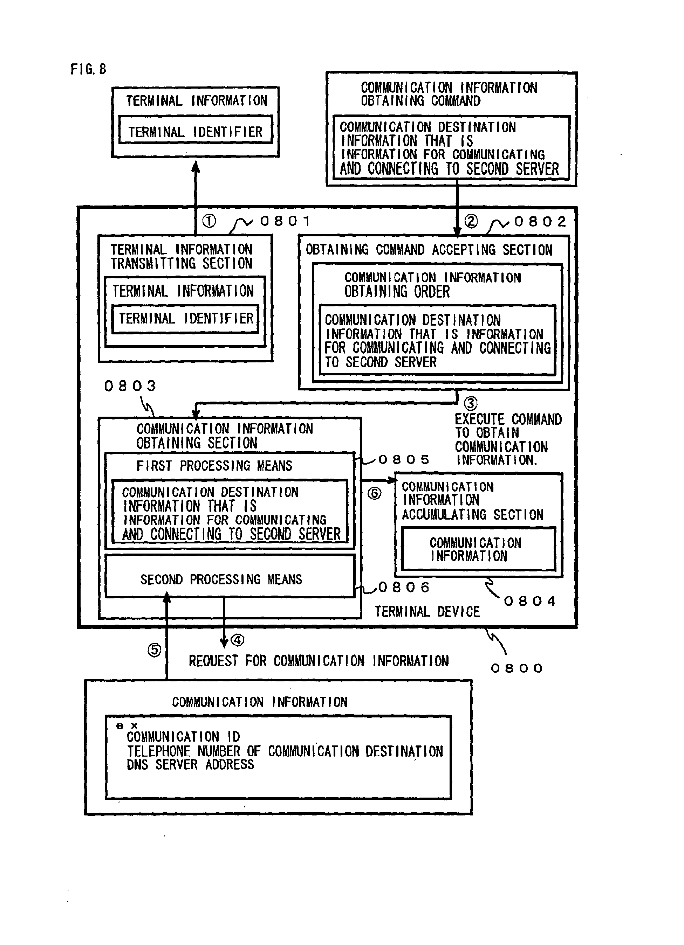

Fig. 8 is the functional block diagram of a terminal device 0800 of this embodiment. It is characterized in that a communication information obtaining section 0803 is separated into first processing means 0805 and second processing means 0806, in which the first means 0805 obtains the communication destination information that is information to communicate and connect to the second server and does not write the information in the non-volatile memory. The rest of the basic configuration is the same as the above-described terminal device, which matches on the point that it has a terminal information transmitting section 0801, the communication information obtaining section 0803, an obtaining command accepting section. 0802, and a communication information storage section 0804.

Furthermore, as described above, the second processing means 0806 is characterized in that it accesses the second server to obtain the communication information based on the communication destination information, and the first processing means 0805 and the second processing means are separated.

Since the terminal device is configured so that externally obtained information (such as communication destination information) is not written therein, it is possible to prevent the device from causing malfunction even if the information contains maliciously corrupted information, or information that could cause malfunctions in the terminal device, or the like (computer virus, for example).

The separation means that an execution module is separated when the first processing means 0805 and the second processing means 0806 are implemented by software programs. Alternatively, when they are implemented by hardware, it means that a circuit board is separated.

In the above-described terminal device, the case is described where terminal information was transmitted to the first server. The terminal information is used for generating or selecting the communication information in the first server. However, there are cases where the communication information is generated or selected not based on the terminal information. This is the case where the communication information is previously prepared in the first server. In this case, it is not necessary for the terminal device to transmit the terminal information. Specifically, a type of terminal device that does not have the terminal information transmitting section as an essential constituent can be used.

Next, the embodiment of a system including the above-described terminal device will be described.

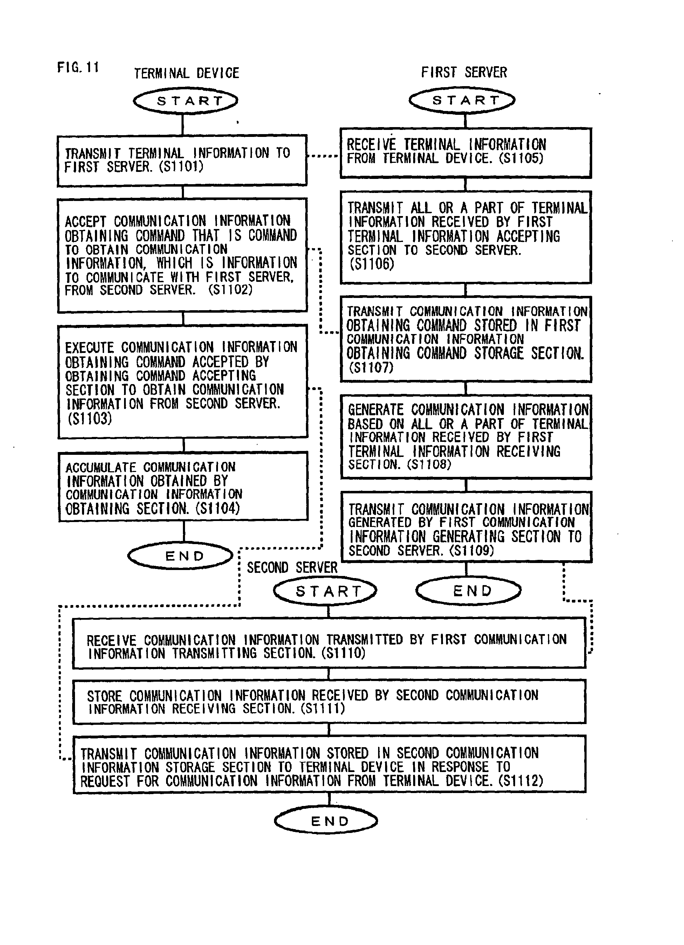

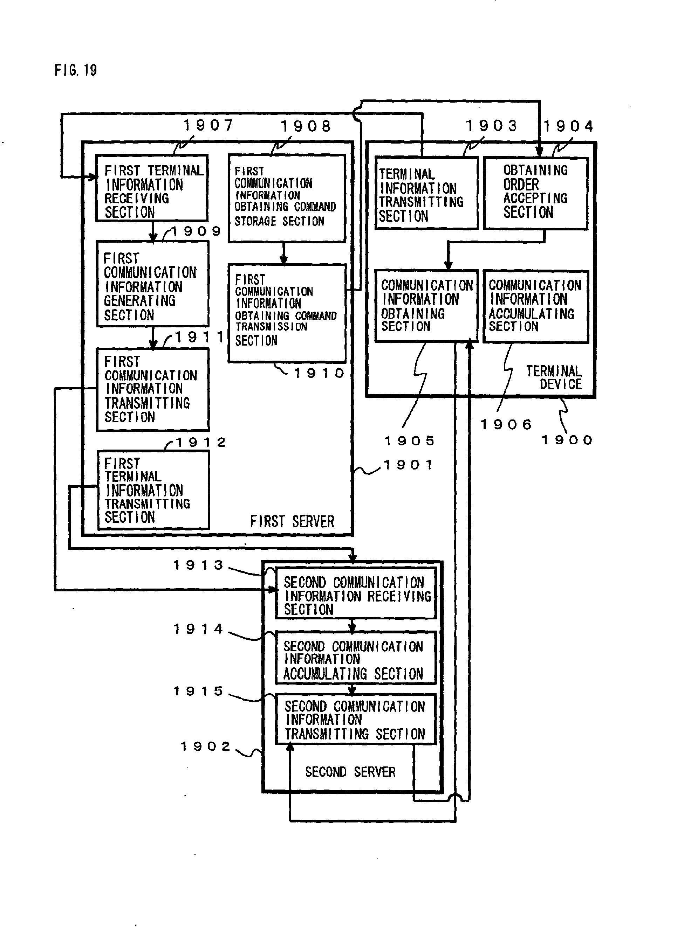

The first embodiment is as shown in Fig. 19. The processing flow will be described referring to the flowchart of Fig. 11. As shown in the drawing, the system includes a terminal device 1900, a first server 1901, and a second server 1902. The terminal information sent from a terminal information transmitting section 1903 (step S1101) is received by a first terminal information receiving section 1907 (step S1105), first communication information is generated in a first communication information generating section 1909 (step S1108) , and a first communication information transmitting section 1911 sends it to a second communication information receiving section 1913 of the second server 1902 (step S1109, step S1110) . Further, a first terminal information transmitting section 1912 of the first server 1901 sends all or a part of the terminal information to the second server 1902 (step S1106). In the second server 1902, the second communication information receiving section 1913 receives the communication information sent from the first communication information transmitting section 1911 of the first server 1901 (step Sub), a second communication information storage section 1914 stores it (step S1111). Furthermore, a first communication information obtaining command storage section 1908 of the first server 1901 sends a first communication information obtaining command transmission section 1910 in proper timing (step S1107), and an obtaining command accepting section 1904 of the terminal device 1900 accepts it (step S1102). The accepted obtaining command is executed, the communication information obtaining section 1905 requests the second server 1902 to obtain the communication information, and the second server 1902, on receiving the request, transmits the communication information stored in the second communication information storage section 1914 from a second communication information transmitting section 1915 to the communication information obtaining section 1905 of the terminal device 1900 (step S1112). The transmitted communication information is stored in a communication information storage section 1906 of the terminal device 1900 (steps S1103, S1104) . Herein, internal processing performed in the first server and the second server will be further described.

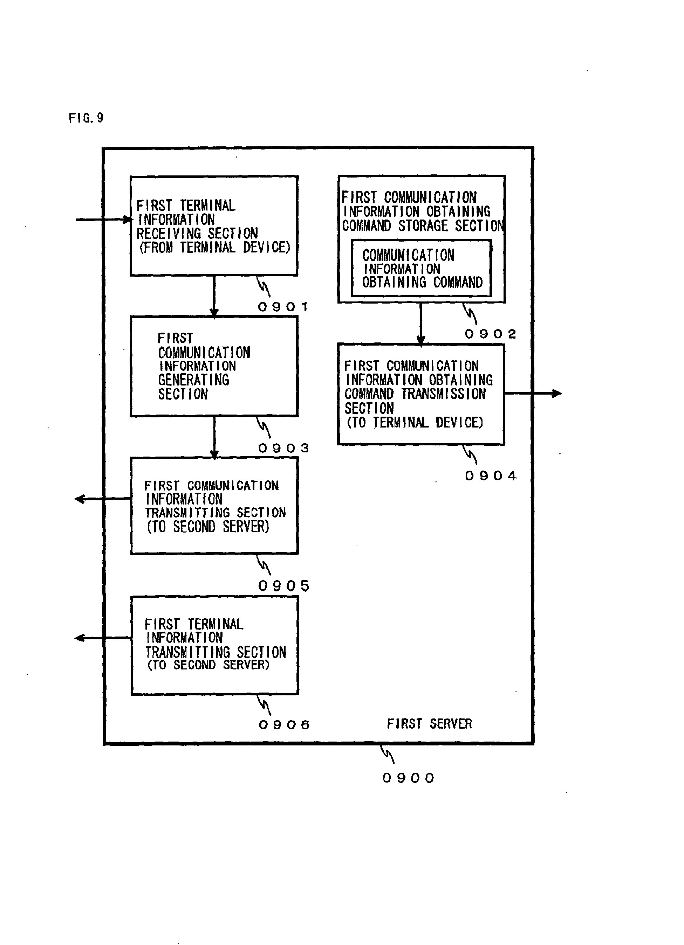

Fig. 9 is the functional block diagram of the first server. As shown in the drawing, a first server 0900 comprises a first terminal information receiving section 0901, a first terminal information transmitting section 0906, a first communication information obtaining command storage section 0902, a first communication information obtaining command transmission section 0904, a first communication information generating section 0903, and a first communication information transmitting section 0905.

The first terminal information receiving section 0901 receives terminal information from the terminal device. The first terminal information transmitting section 0906 transmits all or a part of the terminal information received by the first terminal information receiving section to the second server. The reason of all or a part of the information is that the terminal information is not necessarily needed to configure the communication information.

The first communication information obtaining command storage section 0902 stores communication information obtaining commands. To 'store' includes both storing in a non-volatile manner and storing in a volatile manner. Further, the communication information obtaining command may be obtained from the second server, or the first server 0900 may generate it by itself. Alternatively, fixed commands are previously stored in the storage section and a command may be accessed from the section.

The first communication information obtaining command transmission section 0904 transmits a communication information obtaining command stored in the first communication information obtaining command storage section 0902 to the terminal device. This is because the terminal device requests the second server of the communication information.

The first communication information generating section 0903 generates the communication information based on all or a part of the terminal information received by the first terminal information receiving section 0901. Herein, 'based on the terminal information received' means that the most suitable communication information is generated according to the received terminal information. For example, it means that the telephone number of the closest access point having the most inexpensive communication cost is selected out of the telephone numbers of a plurality of access points from address information contained in the terminal information, a communication protocol according to the type of terminal device contained in the terminal information is selected, or the like as described above.

Regarding the selection of the telephone number of access point, when there are a plurality of telephone numbers for access points, for example, the telephone number of each access point is associated with the closest area code and stored. Specifically, assuming that the telephone number of an access point is 075-***-****, '075' (Kyoto city) and '0742' (Nara city) are associated as the closest area code with this access point in addition to '077' (Shiga prefecture). The area codes of neighboring areas are similarly associated with the access points of Osaka city, the access points of Hiroshima city, the access points of Hakata city, and the access points of Tokyo as well.

Then, if it is found out that the area code of a telephone number that the terminal device uses is '077' from the received terminal information, '075-***-****' is selected as the telephone number of the access point associated with '077'. Consequently, the telephone number of the access point is used as a part of the communication information.

The first communication information transmitting section 0905 transmits the communication information generated by the first communication information generating section 0903 to the second server.

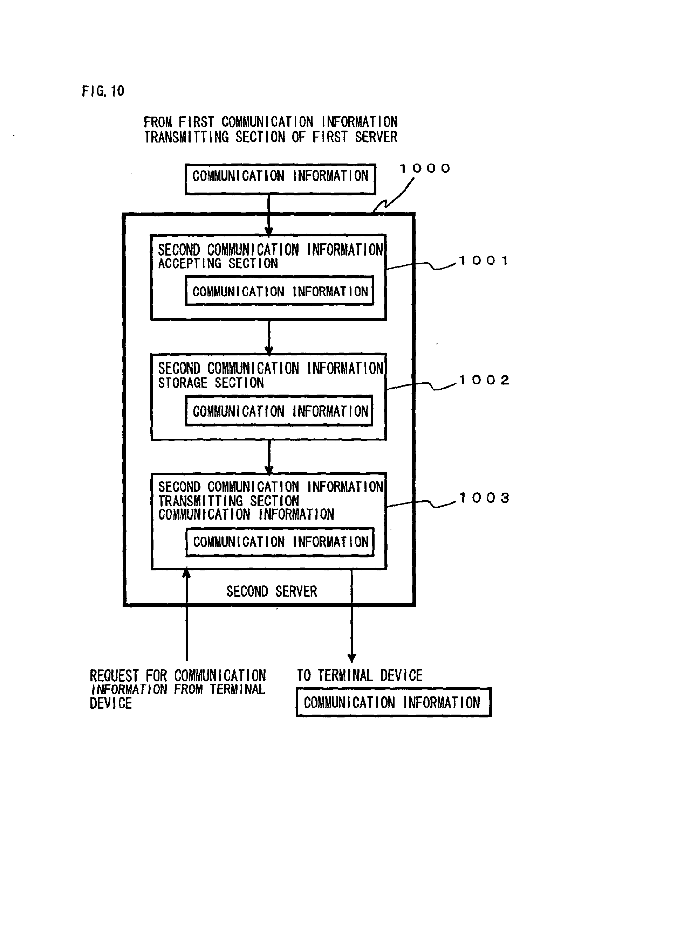

Fig. 10 shows the functional block diagram of the second server. A second server 1000 comprises a second communication information receiving section 1001, a second communication information storage section 1002, and a second communication information transmitting section 1003, as shown in the drawing.

The second communication information receiving section 1001 receives the communication information transmitted from the first communication information transmitting section. The second communication information storage section 1002 stores the communication information received by the second communication information receiving section 1001. The second communication information transmitting section 1003 transmits the communication information stored in the second communication information storage section 1002 to the terminal device in response to the request of communication information from the terminal device. Herein, to 'transmit' does not only mean to simply send information but also means to write the information that has been sent.

Fig . 11 shows the flow of processing that the three parties of the terminal device, the first server, and the second server perform. The details will not be repeated because they have already been described in the explanation for each item hereinabove. The setting of communication information is performed while the three parties exchange information with each other. Areas connected by broken lines are the processing in a mutual corresponding relationship (receiving and sending, for example). Further, Fig. 19, is the view showing the functional blocks of the three parties of the terminal device, the first server, and the second server, and the relationship thereof. As shown in the drawing, the three parties exchange various kinds of information with each other to safely and securely store the communication information in the terminal device.

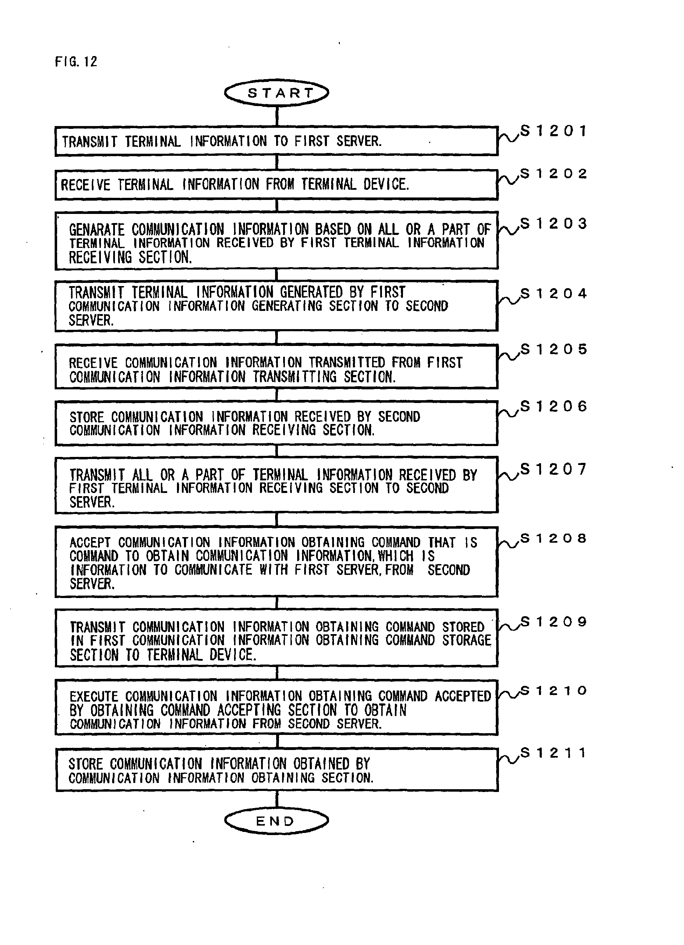

Fig. 12 shows what kind of processing procedure is made when the sequence of the processing is viewed as a whole. The processing flow will be briefly described. The terminal information is transmitted to the first server (step S1201). In response to this, the first server receives the terminal information (step S1202). Sequentially, the first server generates the communication information based on the terminal information (step S1203). The generated communication information is further transmitted to the second server (step S1204). In response to this, the second server receives the communication information (step S1205). The received communication information is stored (step S1206). Further, the first server transmits all or a part of the terminal information to the second server (step 51207) . The first server accepts the communication information obtaining command from the second server or the like (step S1208) . In response to this, the first server transmits the communication information obtaining command to the terminal device (step S1209). The terminal device, in response to the accepted communication information obtaining command, obtains the communication information from the second server (step S1210) . The obtained communication information is stored in the terminal (step S1211), and, in response to this, or this becomes the configuration of communication information for the first server, the terminal device then can receive the network connection service from the first server through the regular connection.

Note that, in the description of the foregoing data processing system, it has been described that the terminal information was communicated from the terminal device to the first server, the first server generated the communication information based on the terminal information, the communication information was communicated to the second server, and all or a part of the terminal information was also communicated from the first server to the second server.

However, this processing flow is not necessarily the only solution. As described above, the configuration in which the generation of communication information is performed in the first server not based on the terminal information is effective as the problem solution as well.

In this case, the terminal device has the configuration where communicating the terminal information to the first server is not essential. Therefore, since the terminal information is not communicating to the first server, it is not necessary for the first server to communicate the terminal information to the second server as well. To specify the telephone number or the address of the terminal device that is a transmission destination of communication information by the second server, the server may directly obtain the information or they may be specified based on the information previously stored in the second server.

Next, the second embodiment will be described. The first embodiment was the case where the communication information for communication setting, which is allocated for the user's terminal device, was directly communicated to the server administered by an institution such as the communication configuration and administration company. On the other hand, the second embodiment is the case where the first server does not directly communicate the communication information to the second server but communicates it via the user' s terminal device. In short, it is a technique where the safe and secure configuration of communication information of the terminal device is performed similar to the first embodiment without direct communication between the first server and the second server.

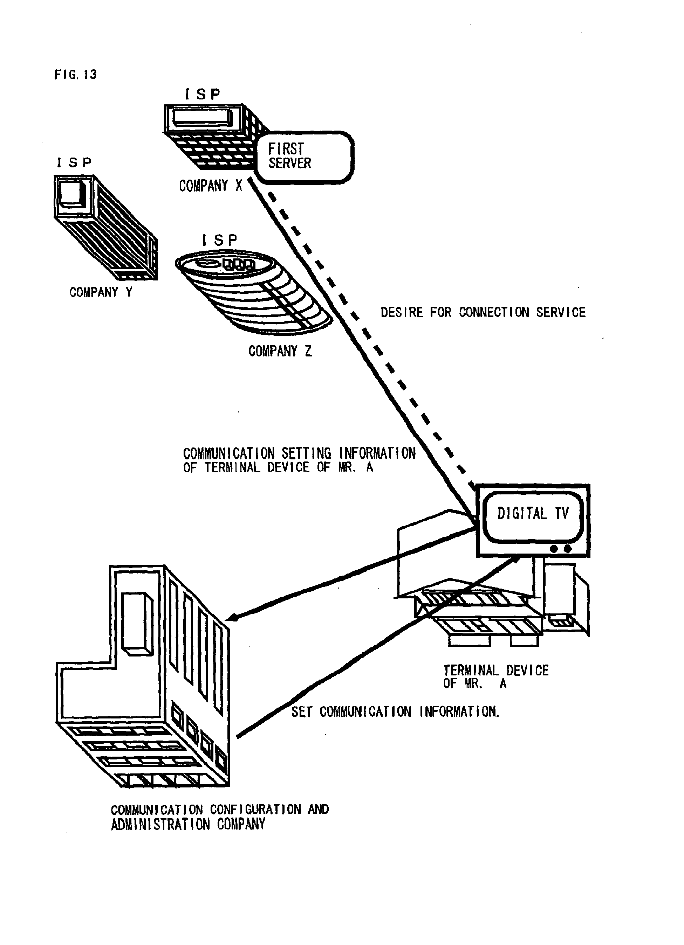

The concept of the second embodiment will be further described. Fig. 13 shows the concept of the second embodiment. A broad flow will be as follows. Mr. A selected company X as the Internet service provider (ISP) out of companies X, Y, and Z. Company X receives various kinds of information from Mr. A for generating or determining the communication information. For example, the information is the terminal ID for identifying a terminal, an address, name, age, a bank deposit account number for automatic debt transfer of the financial consideration service, credit card number, password, or the like. What is described above is the same as the first embodiment.

What is different is the flow of communicating the communication information to the communication configuration and administration company or the like. The communication information is not communicated from the server of the Internet service provider or the like to the second server of the communication configuration and administration company or the like. It is once communicated to the terminal device of Mr. A. However, the configuring or the like of communication information for the terminal device is not performed here. This is because the configuring of the communication information always needs to be performed only for the one accepted from the communication configuration and administration company or the like to ensure the reliability of a signal (communication information) to be configured. Consequently, the communication information sent from company X that is the Internet service provider is then sent from the terminal device of Mr. A to the communication configuration and administration company or the like. This is because the terminal device accepts the communication information again from the communication configuration and administration company or the like to configure for communication. The communication information that the terminal of Mr. A has sent to the communication configuration and administration company or the like is subject to inspection whether it is communication information that does not cause malfunctions in the terminal device or not for sure, for example, and sent to the terminal device of Mr. A. Note that the terminal information of the terminal of Mr. A is sent as well. This is because the terminal information is necessary to send the communication information to the terminal of Mr. A.

Herein, the communication information sent from the communication configuration and administration company or the like to the terminal device of Mr. A and the communication information sent from the server of company X that is the Internet service provider to the terminal device of Mr. A do not necessarily match completely, but they may be the ones to which correction or addition has been made for necessary communication configuration. The configuration of the communication of the terminal device of Mr. A is performed through remote processing via the communication line. The communication line includes a leased line, a public telephone line, and other communication means, and it is possible to partially use broadcasting.

Furthermore, this embodiment is characterized in that it is not necessary for the server of company X (the Internet service provider) to directly communicate with the server of the communication configuration and administration company. Therefore, from the perspective of the communication configuration and administration company, there is an advantage that preparation for the communication with the Internet service provider (such as technical problems for connection between the server of the Internet service provider and the server of the communication configuration and administration company) can be omitted to simplify the flow of information and the configuration of the first and second servers.

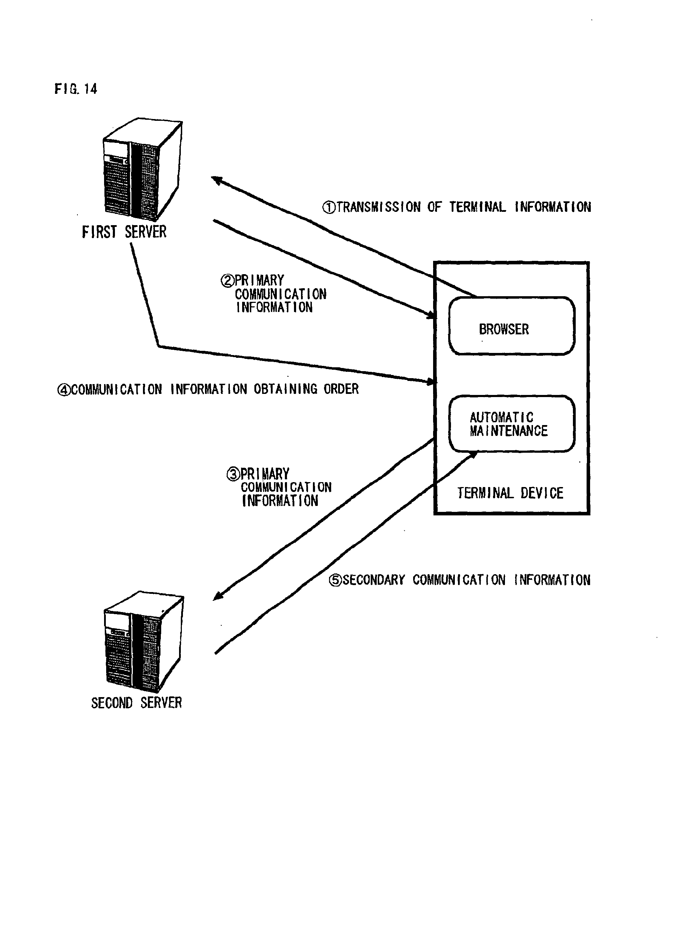

Fig. 14 shows the schematic view of the processing flow of this embodiment. Firstly, with the use of the provisional connection of the Internet service provider or the like, an address, a name, a card number for payment, a mail address, and the like are registered with the first server via the dialog processing with the terminal device (procedure 1). This is performed by using a browser or the like installed in the terminal device. The browser is useful in this processing because it generally does not perform forced writing or the like to the non-volatile memory in the terminal device. Subsequently, the first server generates or selects communication information to be passed to the second server as the communication information. For example, it means that the closest access point is selected based on the address information obtained from the terminal device and the least loaded telephone number of the access point is selected, or the like. This is an item that a person who configures the terminal device conventionally has checked a list with his/her own address or referred to data or the like regarding a load status of a line specified by the telephone number, and has configured manually. The communication information generated or selected is once communicated to the terminal device (procedure 2) . The communication information described above shall be referred to as primary communication information to discriminate from communication information communicated from the second server afterwards. The primary communication information is simply held temporarily in the terminal device without being written in the non-volatile manner. The security to the terminal device can be ensured at this point. Note that the primary communication information is not necessarily generated based on the terminal information. The communication information previously prepared in the first server can be also used. In this case, the passing of the terminal information from the terminal device to the first server is not an essential constituent. The primary communication information may be returned to the terminal device in response to the request from a terminal that the user simply wants to receive the connection service.

The primary communication information communicated to the terminal device and held therein is communicated from the terminal device to the second server. This is because the second server generates secondary communication information based on the primary communication information. It is a matter of course that the primary communication information and the secondary communication information may be identical, or may be the ones to which change, addition, or deletion of necessary information has been made.

Subsequently, when the second server becomes capable of communicating the secondary communication information to the terminal device, the second server sends a communication information obtaining command that is a command, saying, 'Obtain the secondary communication information for communication configuration from the second server'. Determination of notification timing of the communication information obtaining command may be transmitted by notification from the terminal device to the first server that it has sent the primary communication information to the second server, for example, or, a configuration is possible that the communication information obtaining command is generated in the terminal device in response to the fact that the terminal device itself has sent the primary communication information.

When the communication information obtaining command is issued, the terminal device requests the second server of the secondary communication information, and the second server sends the secondary communication information for communication configuration to the terminal device on receiving the command. On receiving the information, the terminal device configures the regular connection of the communication with the first server or the like based on the secondary communication information. This configuration is automatically performed by a program of automatic maintenance or the like. Accordingly, it is necessary that the program of automatic maintenance work to configure only the communication information (secondary communication information) obtained from the second server and have security such that it does not perform communication configuration even if the program ever receives communication information from another server. However, the case where such server is a party that is previously registered as a safe communication destination is an exception. This is because the program may combine a function of another automatic configuration with the configuration of communication information of the terminal device. Note that the user who uses and controls the terminal with this automatic setting function is freed from the configuration of communication information done by a complex manual labor. Therefore, it is possible that the user easily receives the network connection service even if he/she is not well-versed in communication technology.

Next, the functional block of the terminal device used in the second embodiment will be described.

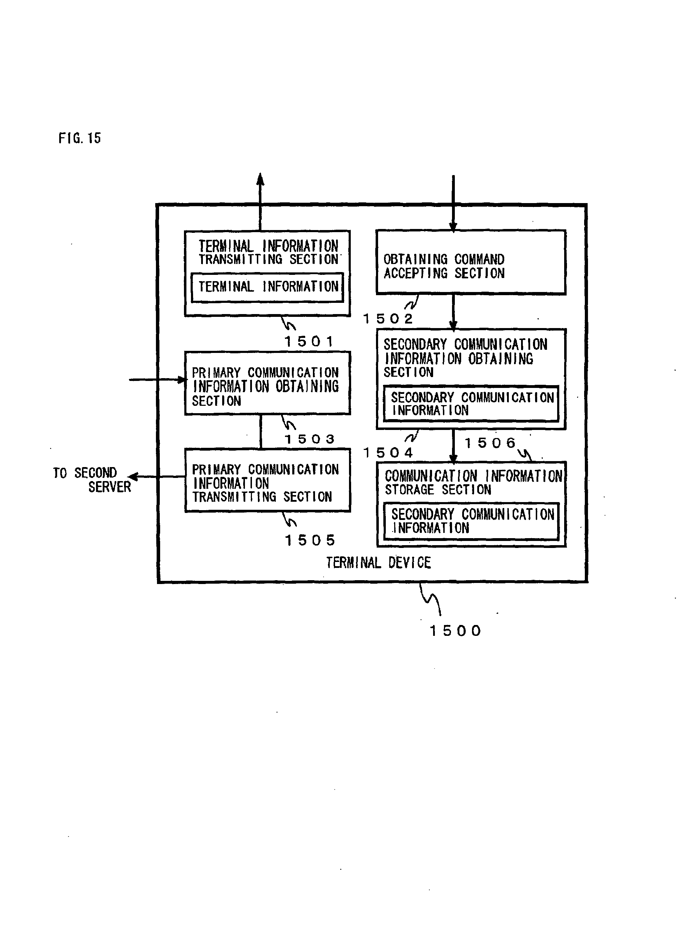

Fig. 15 is the view showing the functional block of the terminal device used in the second embodiment. As shown in the drawing, the terminal 1500 comprises a terminal information transmitting section 1501, an obtaining command accepting section 1502, a primary communication information obtaining section 1502, a primary communication information transmitting section 1505, a secondary communication information obtaining section 1502, and a communication information storage section 1506.

The terminal information transmitting section 1501 transmits the terminal information to the first server. This is because the first server generates or selects the primary communication information based on the terminal information. However, it is not necessary to transmit the terminal information to the first server when the first server generates or selects the primary communication information without depending on the terminal information. In this case, the terminal information transmitting section is not an essential constituent.

The obtaining command accepting section 1502 accepts the communication information obtaining command that is a command to obtain communication information, which is information for communicating with the first server, from the second server. Herein, the communication information obtaining command may come from any section. For example, it may come from the first server, the second server, or the terminal device itself. Moreover, it may be obtained via broadcasting, or the user himself/herself who controls the terminal may enter it manually. The primary communication information obtaining section 1503 obtains the primary communication information that is information for generating the secondary communication information, which is information for communicating with the first server, from the first server. Note that the configuration of communication information is not performed as described above. The primary communication information transmitting section 1505 transmits the primary communication information obtained by the primary communication information obtaining section to the second server. The secondary communication information obtaining section 1502 executes the communication information obtaining command to obtain the secondary communication information from the second server. The reason the terminal device is allowed to perform an obtaining operation is that the second server cannot determine whether the terminal device in a communication-ready state or not. If the problem can be solved or inefficiency of communication incapability can be permitted, a transmission start signal of the secondary communication information can be sent not from the terminal device but from the second server to the terminal device. The communication information storage section 1506 stores the secondary communication information obtained by the secondary communication information obtaining section. Herein, to store does not only mean to simply copy the information to store into the non-volatile storage section but also includes to perform communication configuration using the secondary communication information.

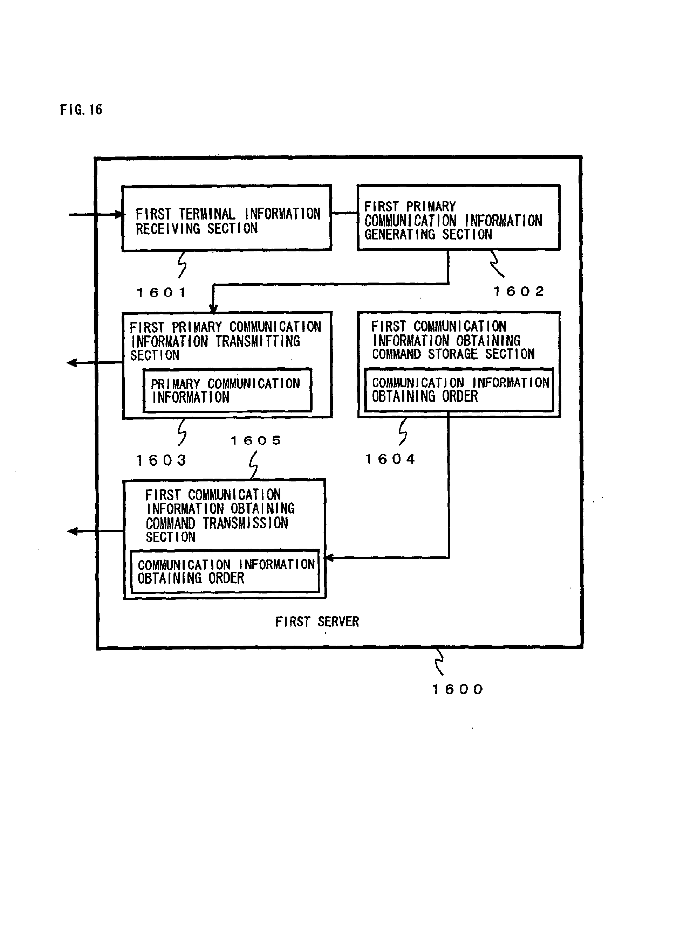

Fig. 16 shows the functional block diagram of the first server. A first server 1600 is the Internet service provider, which refers to a server from which the terminal device tries to receive the regular connection service, an exclusive server for the provisional connection function capable of communicating part or all of the connection information to the server, or the like.

As shown in the drawing, the first server 1600 of the second embodiment comprises a first terminal information receiving section 1601, a first primary communication information generating section 1602, a first primary communication information transmitting section 1603, a first communication information obtaining order storage section 1604, and a first communication information obtaining command transmission section 1605.

The first terminal information receiving section 1601 receives the terminal information from the terminal device. This is because the primary communication information is generated or selected based on the terminal information. However, it is also possible to adopt a configuration where the primary communication information is generated or selected without depending on the terminal information. For example, it is the case where the primary communication information previously stored in the first server is indiscriminately used for all the terminal devices, the case where the primary communication information of a corresponding terminal is selected from plural pieces of primary communication information based on information other than the terminal information, or the like. In this case, the primary communication information receiving section is not an essential constituent.

The first primary communication information generating section 1602 generates the primary communication information based on all or a part of the terminal information received by the first terminal information receiving section 1601. The first primary communication information transmitting section 1603 transmits the primary communication information generated by the first primary communication information generating section 1602 to the terminal device. The first communication information obtaining command storage section 1604 stores the communication information obtaining commands. It is a matter of course that the section 1604 should be provided for the second server when the second server issues the communication information obtaining command, and should be provided for the terminal device when the terminal device itself issues it by the internal processing. The first communication information obtaining command transmission section 1605 transmits the communication information obtaining command stored in the first communication information obtaining command storage section 1604 to the terminal device. This may be provided for the second server similarly as described above. Note that the terminal device does not need this function when the terminal device is provided with the communication information obtaining command storage section. This is because it is a command that the terminal device should finally obtain.

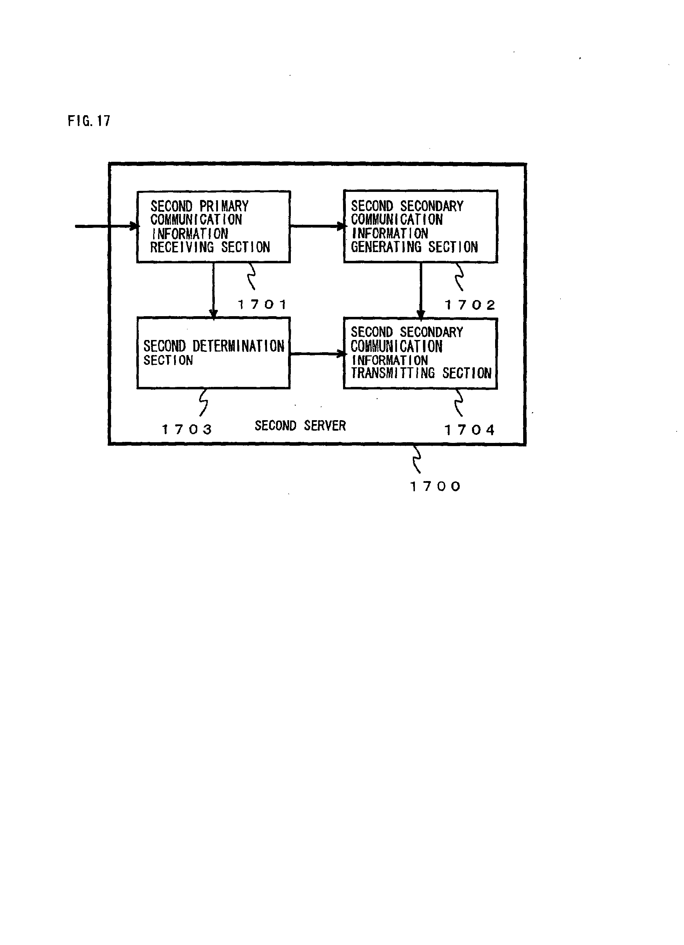

Fig. 17 is the functional block diagram of the second server. As shown in the drawing, a second server 1700 comprises a second primary communication information receiving section 1701, a second secondary communication information generating section 1702, a second determination section 0703, and a second secondary communication information transmitting section 1704.

The second primary communication information receiving section 1701 receives the primary communication information from the terminal device. The second secondary communication information generating section 1702 generates the secondary communication information based on the primary communication information received by the second primary communication information receiving section. The secondary communication information and the primary communication information may be the same, or necessary information is added, unnecessary information is deleted, or a necessary change is made to the primary communication information if necessary. The second determination section 1703 determines transmission validity of the secondary communication information based on the primary communication information received by the second primary communication information receiving section 1701. The 'transmission validity' is a determination from a perspective whether or not malfunctions could occur in the terminal device even if the secondary communication information is sent to the terminal device, inconvenience could occur to the user of the terminal device, or the like.

For example, a determination is made whether or not a server to which the terminal device tries to connect by the secondary communication information is a company for which the communication configuration and administration company or the like does not approve the communication configuration, an access point to which the terminal tries to connect is an appropriate access point (for example, whether it is not an illogical access point in a foreign place but is a domestic access point), or the like. As a result, when it is determined to be an unknown Internet service provider for which the communication configuration is not approved, the secondary communication information is not transmitted to the terminal device, and the terminal device does not perform the communication configuration even if it is transmitted.

The second secondary communication information transmitting section 1704 transmits the secondary communication information to the terminal based on the determination of the second determination section 1703. As described, there are cases where the secondary communication information is not transmitted.

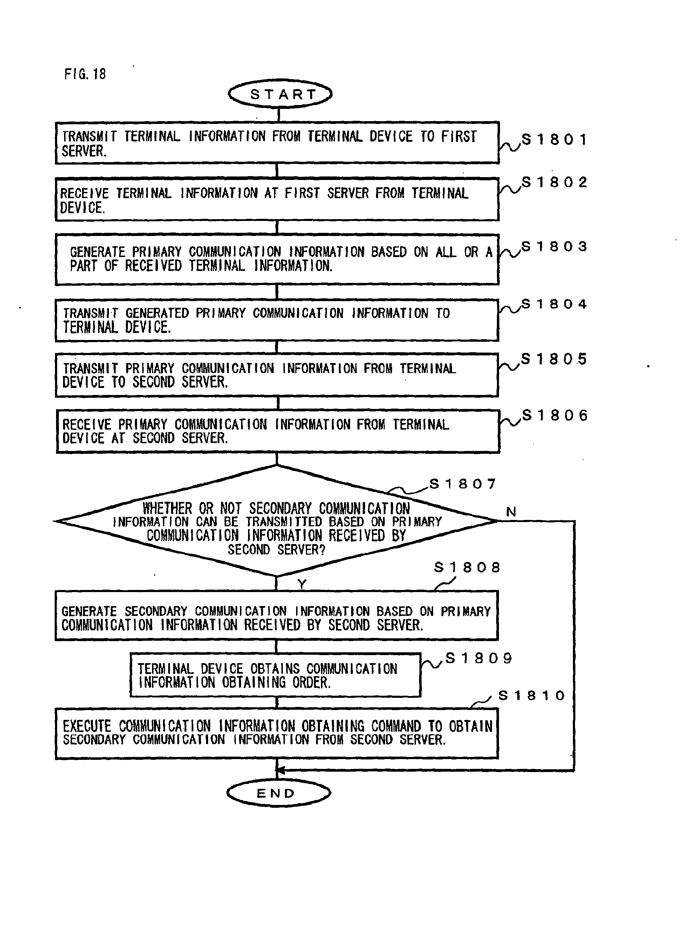

Fig. 18 shows an example of the entire processing flow of the second embodiment. Firstly, the terminal device transmits the terminal information to the first server (step S1801). Subsequently, the first server receives the terminal information in response to this (step 51802) , and generates (or selects on occasion) the primary communication information based on all or a part of the received terminal information (step S1803). Then, the primary communication information is once transmitted to the terminal device (step S1804). The terminal device receives it, and transmits the obtained primary communication information to the second server (step S1805). The second server receives the primary communication information in response to this (step S1806), and determines the transmission validity of the secondary communication information based on the received primary communication information (step S1807). When it is determined that the information may be transmitted as a result of determination, the secondary communication information is generated based on the received primary communication information (step S1808). The processing ends when it is determined that the information must not be transmitted as a result of determination. In the case where the secondary communication information has been generated, the communication information obtaining command stored in the first server or the like is transmitted to the terminal device (this transmission is unnecessary when the terminal device itself brings out the communication information obtaining command), and the terminal device receives it (step S1809). The terminal device that has received the communication information obtaining command executes the communication information obtaining command to obtain the secondary communication information from the second server (step S1810), and ends the processing.

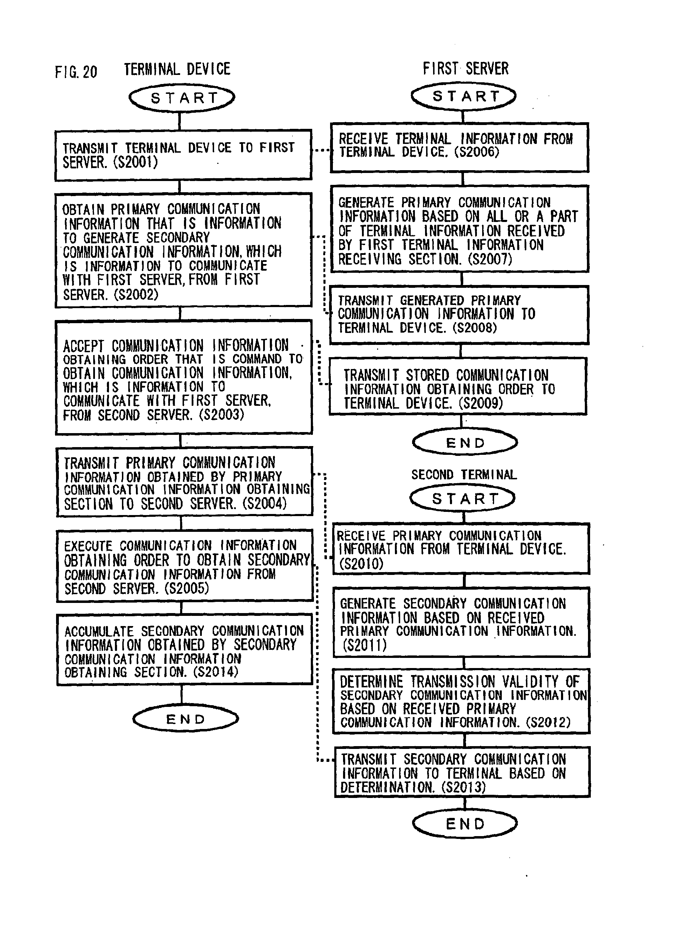

Fig. 20 shows the processing flow that is brought out by the terminal device, the first server, and the second server, which are associated with each other. In the terminal device, as shown in the drawing, a communication information configuration method is executed, which consists of a step of transmitting the terminal information having the terminal identifier for identifying the terminal device (step S2001), a step of accepting the communication information obtaining command that is a command to obtain the communication information that is information for communicating with the first server (step S2003) , a step of executing the communication information obtaining command accepted by the obtaining command accepting section and obtaining the secondary communication information from the second server (step S2005), and a step of storing the communication information obtained by the communication information obtaining section (step S2014). Note that, in the case where the first server generates the primary communication information without depending on the terminal information, the above-described step of transmitting the terminal information is not an essential constituent. On the other hand, it is effective if the processing further includes a step of transmitting the terminal information to the second server to fix the transmission destination of the secondary communication information.

Furthermore, by using a storage medium storing the steps in a computer-executable manner, it is possible to allow the terminal device to easily execute the processing even if each type of terminal device does not previously prepare the processing programs.

The first server may execute: receiving the terminal information from the terminal device (step S2006); generating the primary communication information based on all or a part of the terminal information received by the terminal information receiving section (step S2007); transmitting the generated primary communication information to the terminal device (step S2008); and transmitting the communication information obtaining command stored to the terminal device (step S2009) - Note that a configuration that the first server generates or selects the primary communication information not based on the terminal information is also possible, and the step of receiving the terminal information from the terminal device is not an essential constituent.

The second server may execute: receiving the primary communication information from the terminal device (step S2010); generating the secondary communication information based on the received primary communication information (step S2011); determining transmission validity of the secondary communication information based on the received primary communication information (step S2012); and transmitting the secondary communication information to the terminal based on the determination (step S2013). Therefore, unified configuration processing of communication information by the second server through the remote processing to the terminal device is made possible based on the communication information generated by the first server without communicating between the first server and the second server. This is useful because the complexity of communication between the first server and the second server can be eliminated. Note that, in the second server, obtaining the terminal information from the terminal device makes it possible to fix the transmission destination of the secondary communication information. Accordingly, the processing further having a step of obtaining the terminal information from the terminal device is effective.

Furthermore, description will be given for means for performing authentication for an Internet service provider or the like that provides the connection service to a particular terminal device whether the terminal device requesting connection is a terminal device that is authorized to receive the connection service or not.

Need of authenticating a terminal device is necessary when a connection service company such as the Internet service provider provides service only for the particular terminal. For example, it is the case that the connection service is not provided for a personal computer connected to an ordinary TV that simulates a digital TV when there is an information service provided for the terminal device only in digital TV format.

In the authentication to the terminal device, terminal check information is held in the second server of the communication configuration and administration company or the like, the terminal information is obtained from the terminal device, and whether the terminal information is terminal information of an authorized terminal device or not is determined while it is checked with the terminal check information. The terminal check information is one like a terminal identifier and a password applied when the digital TV is manufactured. In this case, the manufacturer of the digital TV communicates the information to the communication configuration and administration company, and thus it is possible to store the terminal check information.

The determination result is communicated to the first server of the connection service company such as the Internet service provider, and it is determined the terminal device is authorized, the communication information is communicated to the terminal device based on a predetermined procedure.

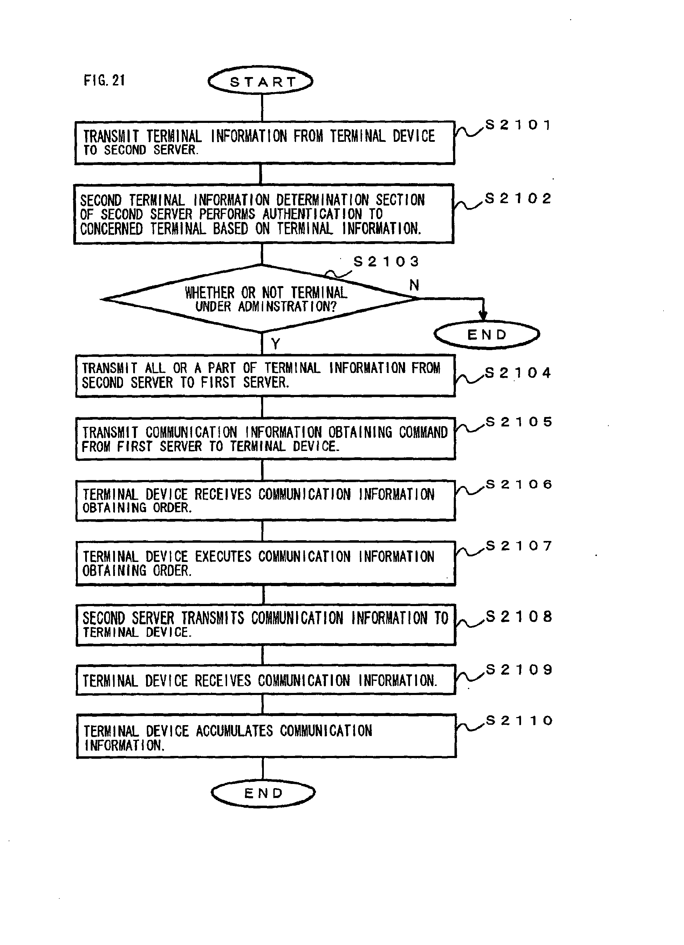

Fig. 21 shows the processing flow of the authentication to the terminal device. Firstly, the terminal device transmits the terminal information to the second server (step S2101). Subsequently, a second terminal information determination section of the second server authenticates the terminal based on the terminal information (step S2102). Then, the second server determines whether it is a terminal under administration or not (step 52103), and if it is not the terminal under administration, the processing ends or the first server is notified of the fact that it is not the terminal under administration. When it is determined to be the server under administration, the second server transmits all or a part of the terminal information to the first server (step S2104) . Then, the first server transmits the communication information obtaining command to the terminal device (step S2105), the terminal device receives the communication information obtaining command (step S2016), the terminal device executes the communication information obtaining command (step 52107), and the second server transmits the communication information to the terminal device (step 52108). Sequentially, the terminal device receives the communication information (step S2109), the terminal device stores the communication information (step S2110), and the processing ends. With the storage of communication information in the terminal device, the communication configuration between the terminal device and the first server is made possible.

As described, since the authentication to the terminal device can be performed solely by the communication configuration and administration company or the like, the network connection company such as the Internet service provider can gain convenience that authentication of a terminal can be simplified.

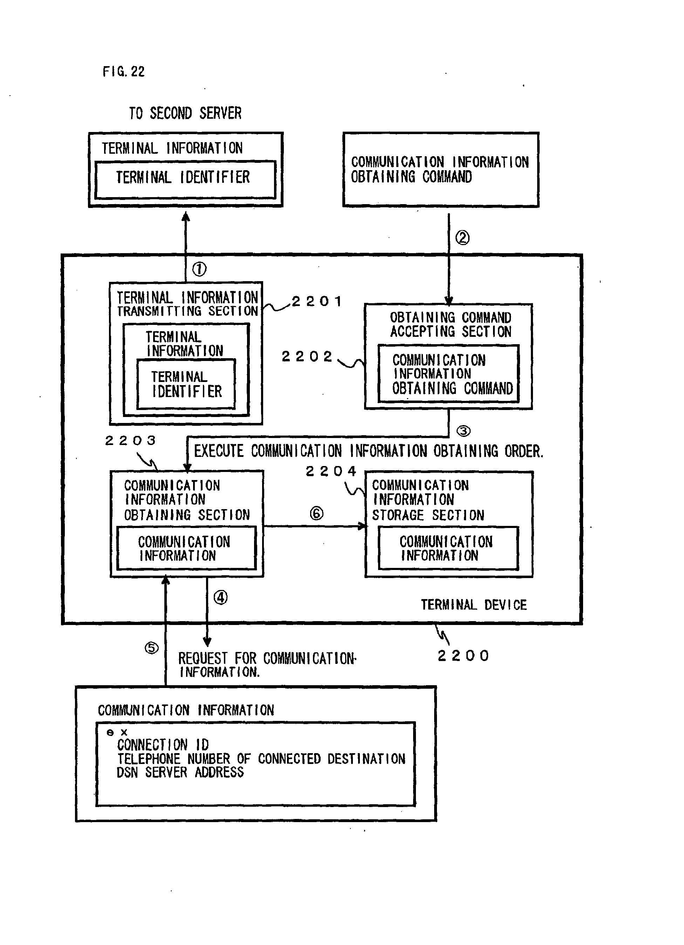

Fig. 22 shows the functional block diagram of this terminal device. As shown in the drawing, the terminal device 2200 comprises a terminal information transmitting section 2201, an obtaining command accepting section 2202, a communication information obtaining section 2203, and a communication information storage section 2204.

The terminal information transmitting section 2201 transmits the terminal information having the terminal identifier that identifies the terminal to the second server. Information such as the terminal identifier is used for authenticating terminals. The obtaining command accepting section 2202 accepts the communication information obtaining command that is a command to obtain the communication information, which is information to communicate with the first server, from the second server. The communication information obtaining section 2203 executes the communication information obtaining command accepted by the obtaining command accepting section to obtain the communication information from the second server. The communication information storage section 2204 stores the communication information obtained by the communication information obtaining section.

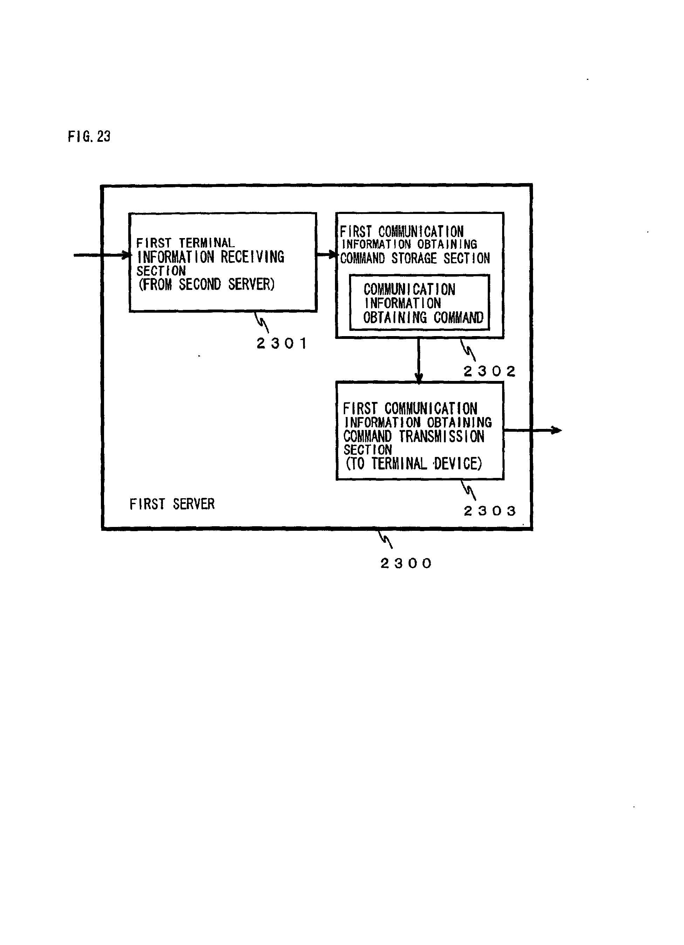

Fig. 23 shows the functional block diagram of the first server that uses the system of authentication. As shown in the drawing, a first server 2300 comprises a first communication information obtaining command storage section 2302, a first terminal information receiving section 2301, and a first communication information obtaining command transmission section 2303. The first communication information obtaining command storage section 2302 stores the communication information obtaining command. The first terminal information receiving section 2301 receives all or a part of the terminal information transmitted from the second server. By receiving the information, it is proven that the terminal device has been authenticated as an authorized terminal device by the second server. For example, when the second server sends back the identification ID of the terminal device, it is found out that the terminal device identified by the identification ID is authorized. The first communication information obtaining command transmission section 2303, when the first terminal information receiving section 2301 receives all or a part of the communication information, transmits the communication information obtaining command stored in the first communication information obtaining command storage section 2302 to the terminal device.

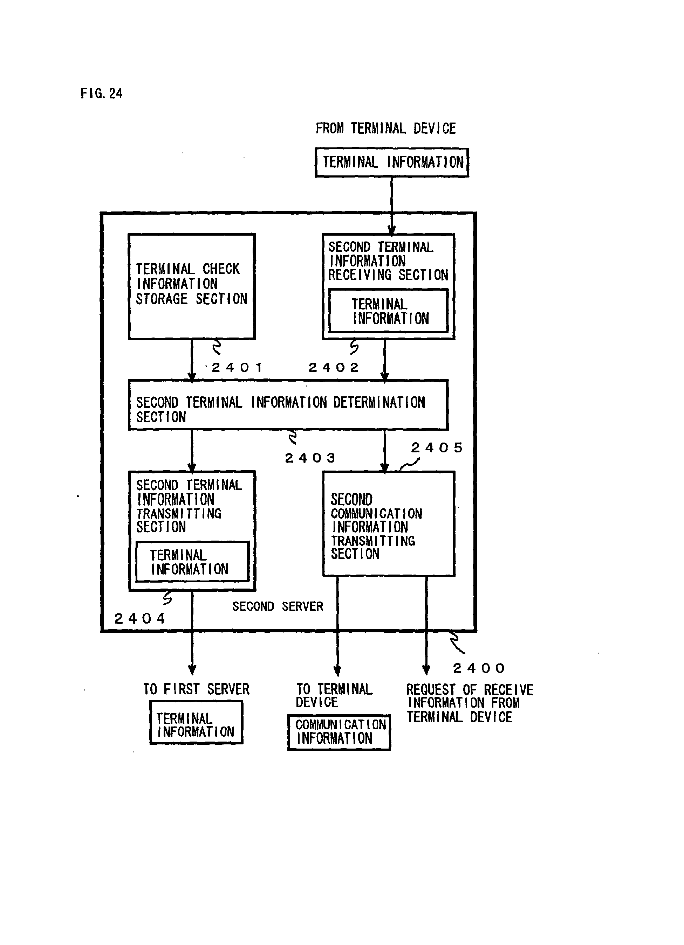

Fig. 24 shows the functional block diagram of the second server used for the authentication. As shown in the drawing, a second server 2400 comprises a terminal check information storage section 2401, a second terminal information receiving section 2402, a second terminal information determination section 2403, a second terminal information transmitting section 2404, and a second communication information transmitting section 2405.

The terminal check information storage section 2401 stores one or more pieces of terminal check information having the terminal identifier. The terminal check information generally contains the terminal identifier, the password, and the like. The terminal identifier, the password, and the like are prepared by being written in the ROM of terminal device before shipment. Then, they are transmitted from the terminal information transmitting section. It is secure when they are encrypted to prevent them from being easily decrypted by a third party. The second terminal information receiving section 2402 receives the terminal information that the terminal information transmitting section of the terminal device has transmitted. The second terminal information determination section 2403 determines whether the terminal identified by the terminal identifier that the terminal information has is an authorized terminal or not from the terminal information received by the second terminal information receiving section 2402 based on one or more pieces of terminal check information stored in the terminal check information storage section 2401. Whether it is authorized or not is determined by checking with the terminal check information stored in the terminal check information storage section. For example, when it has matched the terminal information stored in the terminal check information storage section as a result of checking, the terminal device is determined as authorized. The checking is performed by the terminal ID, the password, and the like. The second terminal information transmitting section 2404 transmits a part or all of the terminal information to the first server in the case of determination by the second terminal information determination section 2403 as authorized. This is because the section notifies the server that the terminal device is authorized that it can receive the network connection service, which is made to be a trigger to transmit the communication information obtaining command to the terminal device. The second communication information transmitting section 2405 transmits the communication information to the terminal device corresponding to the request for the communication information from the terminal device. With this, the communication information is communicated to the terminal device, and it is possible to receive the network connection service via the first server. Note that the communication information may be previously stored in the second server, may be the one received that has been stored in the first server, or the one that the first server has communicated to the second server via the terminal device.

The third embodiment is a terminal device that transmits configuration information to a third server that the second server with which the terminal itself has a trusted relationship indicates.

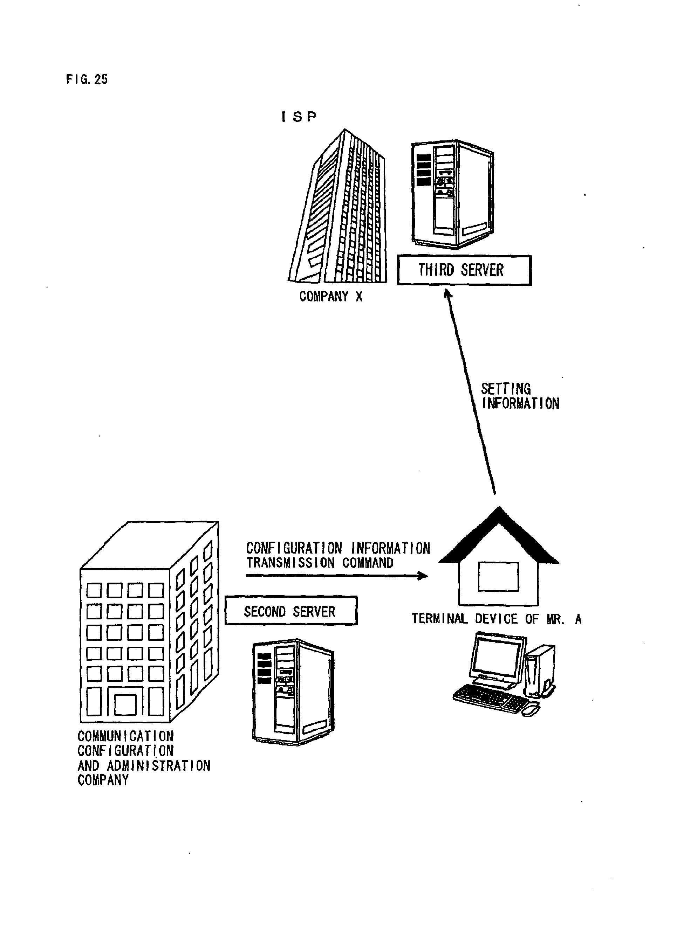

Fig. 25 shows the concept of an example of this embodiment. Mr. A (It substantially means the terminal device that Mr. A owns. However, the terminal device is described as 'Mr. A' as a matter of convenience on occasions in this specification.) has trust relationship with the communication configuration and administration company. It is assumed that Mr. A wants to connect the personal computer that is the terminal device he controls to an arbitrary Internet service provider (described as ' ISP ' hereinafter), and receive the Internet service. With arbitrary timing (when Mr. A accesses the communication configuration and administration company using a browser or the like, for example), the second server in the communication configuration and administration company sends an order to Mr. A to transmit the configuration information of the terminal device to the third server in company X that is the ISP. Although it is often the case that the configuration information of the terminal device of Mr. A is information having high confidentiality regarding the privacy of Mr. A, Mr. A transmits his configuration information to the third server in company X because the command is from the communication configuration and administration company having a trusted relationship with him. Then, company X that has received the configuration information (hereinafter, 'company X' means 'server of company X' in some cases) can perform configuration necessary for the terminal device of Mr. A to receive the Internet service, for example.

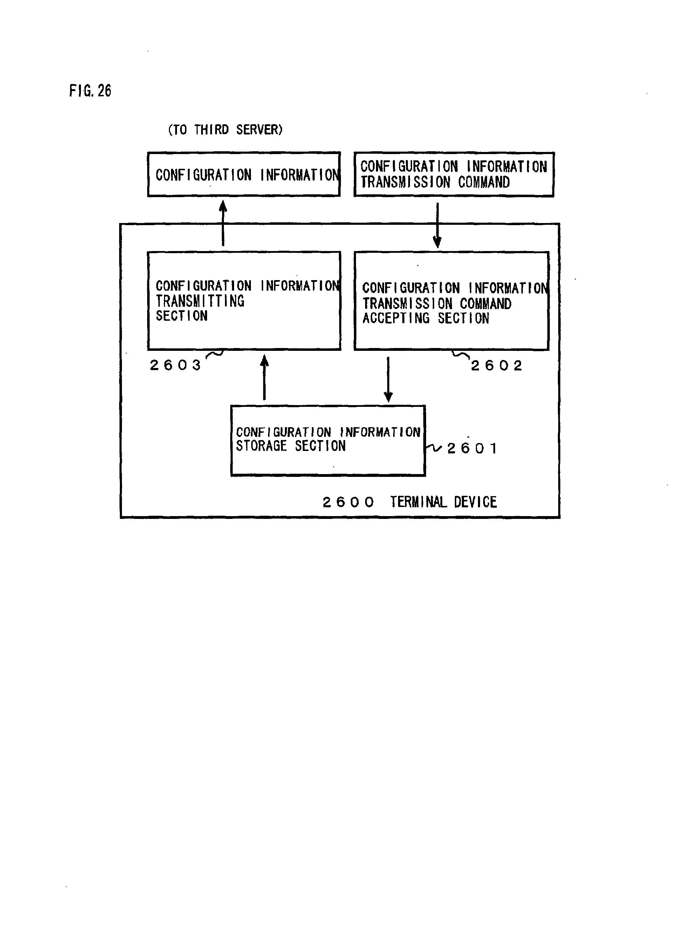

The terminal device 2600 shown in Fig. 26 has a configuration information storage section 2601, a configuration information transmission command accepting section 2602, and a configuration information transmitting section 2603. Fig. 26 is the view showing an example of the terminal device of this embodiment.

Each section that is a component of the present invention includes hardware, software, or both hardware and software. In the case of using a computer, as an example to implement them, for example, the hardware that includes a CPU, a memory, a bus, an interface, a peripheral device, and the like, and the software executable on the hardware. Specifically, by sequentially executing programs loaded into the memory, the function of each section is implemented through processing, storing, or outputting data on the memory or data entered via the interface.

The configuration information stores section 2601 stores the configuration information. The 'configuration information' refers to information regarding the configuration of itself (terminal device). For example, it is information for identifying the terminal by the third party, information (address, name, telephone number, or the like) for identifying the subscriber (Mr. A) who is a user of terminal device, information (deposit account number of bank, credit card number, or the like) necessary for the procedure to pay the financial consideration for each service received through the terminal device, or the like.

Furthermore, it is, in addition, fault diagnosis information, communication history (log), or the like that is information that the terminal itself can create.

The 'fault diagnosis information' is information used for conducting the fault diagnosis of the terminal device, information as a result of conducting the fault diagnosis of the terminal device, or the like. Information used for conducting the fault diagnosis is error history inside the terminal device, activity history corresponding to the error history, or the like. The error history and the activity history can be used for the fault diagnosis.

The 'communication history (log) ' refers to record as to when and where the terminal device has communicated, information as to when it has received what kind of broadcast, or the like, in which the address of the communication destination corresponding to the time, the information for identifying the received broadcast, or the like.

As described, the configuration information is information regarding the privacy of an individual, and its confidentiality needs to be maintained. Therefore, it is dangerous to disclose the information to a total third party.

To 'store' means to hold information in a usable state. Such holding may be either temporary or permanent. As an example, recording into a hard disk (drive), a RAM, a multisession ROM (drive), a DVD (drive), or a CD R/W (drive) can be cited. Further, it also includes recording into a detachable bridge medium (IC card, Smart Media, or the like).

The configuration information transmission command accepting section 2602 accepts a configuration information transmission command. The 'configuration information transmission command' is a command to transmit the configuration information stored in the configuration information storage section to the third server. For example, it refers to information to specify the configuration information that requires transmission, information to specify a transmission destination, or the like.

The necessary configuration information may be the entire configuration information stored in the terminal device or a part of the configuration information. Further, the information to specify the transmission destination may be an ID specifying the stored transmission destination address, or the like.

To 'accept' means to connect only in response to a command that satisfies predetermined requirements out of the ones received to actual processing. Herein, the configuration information transmission command is transmitted from the second server in the communication configuration and administration company to the terminal device of Mr. A, and then, the configuration information transmission command accepting section in the terminal device accepts it after determining the predetermined requirements.

In the case where the second server that is the transmission destination of the transmission configuration information transmission command is a server having a trusted relationship for Mr. A, processing for acceptance is performed because the terminal device does not suffer any damage due to the information.

As a method of confirming whether the transmission source of the configuration information transmission command is trustworthy or not trustworthy, there is a method of determining by an ID (identification code) for identifying the server of the transmission source, which is contained in the configuration information transmission command, a method of using communication via public key encryption between the server and the terminal device, or the like.

Furthermore, a method of finding unauthorized alteration by using a digital signature added to the configuration information transmission command is also effective.

Thus, the terminal device does not accept the configuration information transmission command even if an unauthorized configuration information transmission command by the third party is transmitted to Mr. A's terminal device.

The configuration information transmitting section 2603 executes the configuration information transmission command accepted by the configuration information transmission command accepting section, and transmits it to the third server.

Firstly, configuration information to be transmitted is selected from the configuration information storage section. The selected configuration information is transmitted to the third server in company X, which is an ISP having no direct trusted relationship. The reason why the transmission processing of the configuration information is performed to the third server in company X, which has no direct trusted relationship, is because the configuration information transmission command has been transmitted from the communication configuration and administration company having a trusted relationship for Mr. A (the 'communication configuration and administration company' could mean the 'server of the communication configuration and administration company'. The same applies hereinafter.), and a trusted relationship has thus been established with the third server even though it is indirect.

Mr. A trusts the communication configuration and administration company, and transmits his own configuration information to company X having no trusted relationship. Even if a third party who wants to steal the configuration information of Mr. A transmits the unauthorized configuration information transmission command to Mr. A to make him transmit the configuration information to a proper server, Mr. A does not accept nor execute the configuration information transmission command from a server having no trusted relationship.

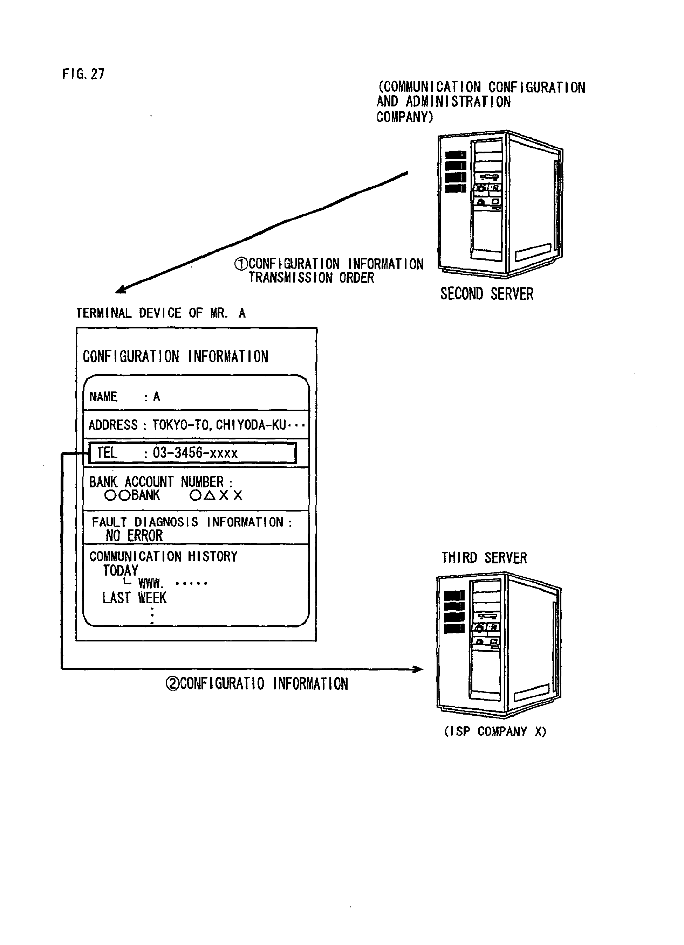

Fig. 27 schematically shows the flow of the processing where the configuration information transmission command and the configuration information are transmitted.

Firstly, the second server transmits the configuration information transmission command to the terminal device of Mr. A. In the example shown in the drawing, the second server transmits the command, saying, 'Transmit the configuration information that is 'The telephone number of Mr. A''. The terminal device executes the configuration information transmission command only when the second server is the server having a trusted relationship, and selects the configuration information indicated by the configuration information transmission command out of the configuration information stored in the terminal device of Mr. A. Then, it transmits the selected configuration information that is 'the telephone number of Mr. A'. Subsequently, the third server that has received the configuration information can perform necessary setting for the terminal device of Mr. A to receive the Internet service, for example, by using the configuration information. It is a matter of course that the server using the configuration information and the server receiving the configuration information may be different servers.

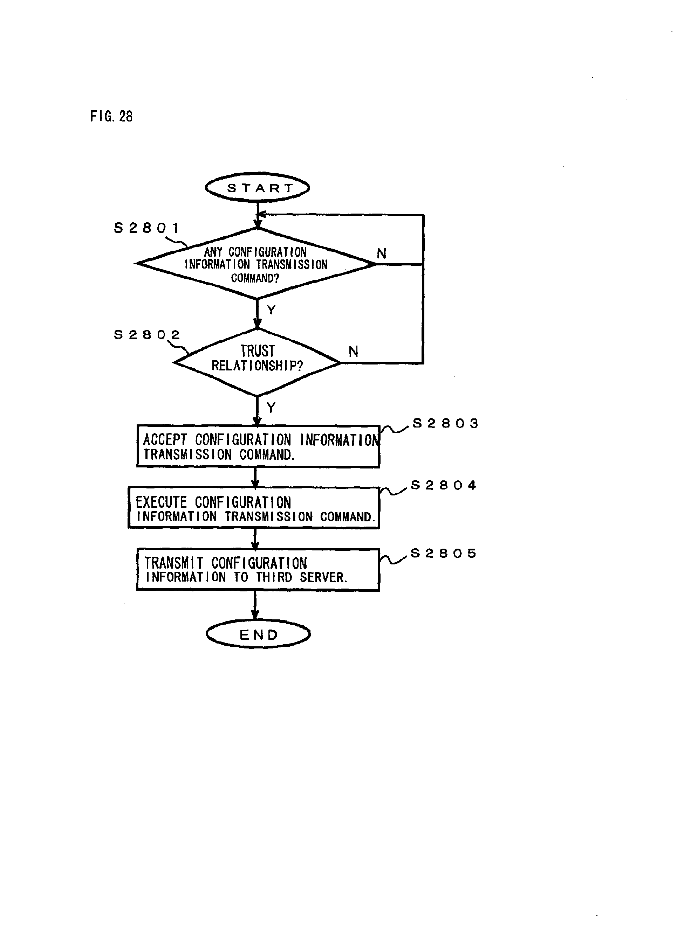

Fig. 28 shows the processing flow by the terminal device in this embodiment. The communication processing in this embodiment includes the five steps shown below. Firstly, the terminal determines whether there is the configuration information transmission command or not at step S2801, and determines whether its transmission destination is a server having a trusted relationship or not at step 52802. When the determination result that it had a trusted relationship is obtained at step S2802, the device accepts the configuration information transmission command that is a command to transmit it to the third server at step S2803 (configuration information transmission command accepting step), executes the configuration information transmission command at step S2804, and transmits the configuration information to the third server at step S2805 (configuration information transmission step). The above-described processing can be executed by a program that allows a computer to execute it, and the program can be recorded into a computer-readable recording medium.

The fourth embodiment is a terminal device based on the third embodiment, which is characterized in that the configuration information transmission command contains communication destination information including a communication destination address of the third server.

The functional block of the terminal device in this embodiment has already been described using Fig. 26. The terminal device 2600 has the configuration information storage section 2601, the configuration information transmission command accepting section 2602, and the configuration information transmitting section 2603.

The configuration information storage section 2601 performs the same processing as the third embodiment.

Although the configuration information transmission order accepting section 2602 performs basically the same processing as the third embodiment, what is different in this embodiment is that the configuration information transmission command contains the communication destination information including the communication destination address of the third server that is a destination to which the configuration information is transmitted.

The 'communication destination address' is information showing a server that becomes the connection destination, which is a URI, a telephone number, or the like. The URI denotes the initial letters of a Uniform Resource Identifier, which is a dominant conception to a URL (Uniform Resource Locator) showing the location of WWW information on the Internet.

The communication destination address may not only be fixed but also change dynamically. For example, it is possible to change the communication destination address according to the line load status of the server that is the destination to which the configuration information is transmitted or an operation stop status of the server due to failure, maintenance, inspection or the like. In the case where a user tries to receive the ISP service by using the configuration information, it is useful when the configuration information transmission command is allowed to contain the communication destination address of a closer access point corresponding to new construction of the access point.

When a line is busy, the terminal device can perform smooth communication with the third server if it uses a communication destination address where a vacant line can be selected and connected.

In addition, there are cases where the most suitable server can be selected corresponding to the configuration information to be transmitted. For example, regarding the information service by age, the URI of a server that provides service specialized in age bracket corresponding to the configuration information is selected.

Furthermore, in the case where company X prepares a plurality of devices equivalent to the third server for load dispersion, the transmission destination address (to which of a plurality of third servers the terminal should be connected) may be set dynamically based on an arbitrary rule. Herein, as the arbitrary rule, there is a method of randomly dispersing using random numbers, a method of dispersing by areas of terminals, a method of dispersing by computing a route by which a communication cost of terminal becomes cheaper, a method of dispersing based on the communication time between the terminal device and the second server, or the like, and the installation locations of a plurality of the devices equivalent to the third server may be adjacent or remote.

The communication destination address may be the address of a server having no trusted relationship with Mr. A originally. This is because the communication destination address is a destination that the second server in the communication configuration and administration company having a trusted relationship with Mr. A has guaranteed.

Although the configuration information transmitting section 2603 performs basically the same processing as the third embodiment, this embodiment is different on the point that the configuration information is transmitted to the communication destination address of the third server, which is contained in the configuration information transmission command. The configuration information transmission command contains the communication destination address, and the setting information is transmitted to a specified communication destination.

The flow of communication processing by the terminal device in this embodiment has already been shown in the third embodiment.

The fifth embodiment is the second server to transmit the configuration information stored in the terminal device from the terminal device to the third server.

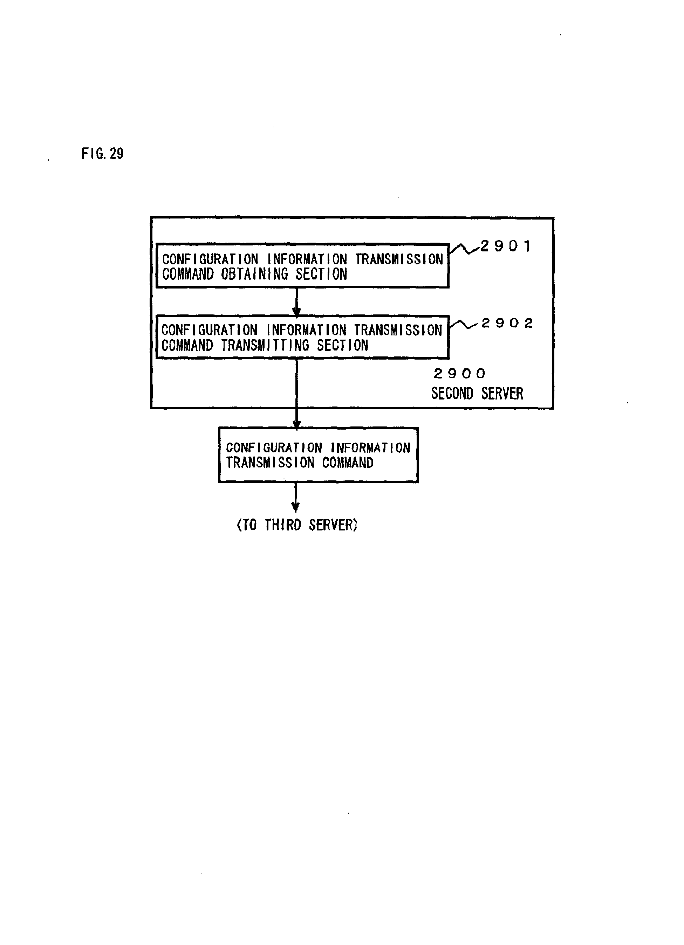

A second server 2900 of this embodiment shown in Fig. 29 has a configuration information transmission command obtaining section 2901, and a configuration information transmission command transmitting section 2902. Fig. 29 is the view showing an example of the functional block of the second server of this embodiment.

The configuration information transmission command obtaining section 2901 obtains the configuration information transmission command that is a command to transmit the configuration information stored in the terminal device from the terminal device to the third server. To 'obtain the configuration information transmission command' is to create the configuration information transmission command or to receive the configuration information transmission command from outside. The configuration information specified by the configuration information transmission command may be the entire configuration information stored or a part of the configuration information. When the section can obtain the configuration information transmission command, the configuration information transmission command can allow the terminal device to transmit the necessary configuration information to the third server.

Further, the obtained timing may be arbitrary. For example, it can be performed by the timing where Mr. A has accessed the communication configuration and administration company by using the browser or the like, the timing on every passage of a certain period of time by using a timer, or the like. The reason why the configuration information transmission order is transmitted in the case of accessing by using the browser or the like is that there are cases where it is possible to interpret the access by using the browser or the like as an indication of intention by Mr. A that the configuration information may be informed to the third server in company X.

In addition, as a case of performing in the timing on every passage of a certain period of time, the timing of regular maintenance inspection is assumed. In short, the error history or the like stored in the terminal device is transmitted to the third server regularly at the point of maintenance inspection. The configuration information transmission command that has been obtained is transmitted to the configuration information transmission command transmitting section.

The configuration information transmission command transmitting section 2902 transmits the configuration information transmission command obtained by the configuration information transmission command obtaining section to the terminal device. The configuration information transmission command accepting section in the terminal device accepts the transmitted configuration information transmission command. Further, when the terminal device confirms whether the server of the transmission destination is a server having a trusted relationship or not, processing is performed such that the configuration information transmission command transmitting section adds a predetermined ID to the configuration information transmission command, the configuration information transmission order is encrypted in a method that the terminal device can decrypt it, or the like. Furthermore, a method of finding the unauthorized alteration by using the digital signature is also effective. Note that it is a matter of course that the configuration information transmission command is transmitted on specifying the terminal device according to the transmission command. However, one configuration information transmission order is not necessarily transmitted to one terminal device, but one configuration information transmission command could be transmitted to a plurality of terminal devices.

The sixth embodiment is a terminal device that accepts the configuration information transmission command that the second server has obtained based on first configuration request information containing information regarding the transfer of a predetermined value. Specifically, it is characterized in that the terminal device is designed to receive the configuration information transmission command based on the information containing the information regarding the transfer of the predetermined value, which is the first configuration request information.

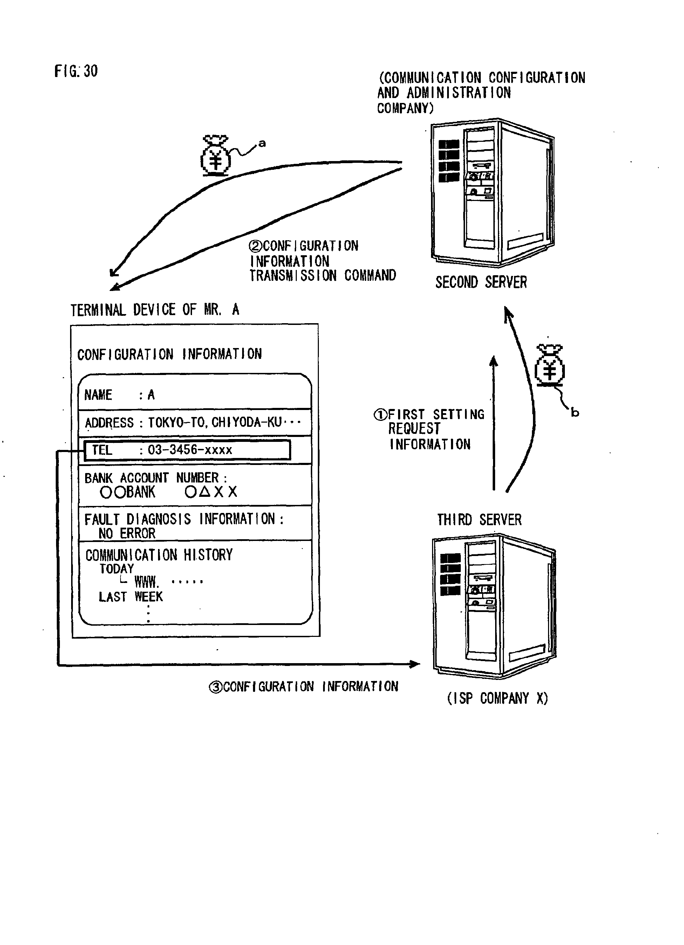

Fig. 30 schematically shows an example of this embodiment. Mr. A has a trusted relationship with the communication configuration and administration company. Since company X itself, which is the ISP who wants Mr. A as a customer, does not have a trusted relationship with Mr. A, it requests the communication configuration and administration company having a trusted relationship with Mr. A to let Mr. A transmit the configuration information of his terminal device to company X. In the example shown in the drawing, the third server in company X transmits the request (first setting request information), saying, 'Send the configuration information that is 'Mr. A's telephone number' to the third server of company X'. At this point, company X pays the value ((a) shown in Fig. 30) to the communication configuration and administration company at the same time. At this point, in addition to the information verifying the payment, the first configuration request information may contain other information regarding the payment such as the date when the payment was made, the amount of the payment, or information showing the schedule of payment. The information showing the schedule of payment is one to clarify that company X has intention to settle the account and to pay the value after confirming that the transmission of configuration information from Mr. A has completed normally.

This is a value for the action that the second server transmits the configuration information transmission command to the terminal device later, or a value for the action that the configuration information of Mr. A is transmitted to company X. It is possible that the communication configuration and administration company does not transmit the configuration information transmission order if it cannot confirm the payment.

On receiving the first configuration request information, the second server in the communication configuration and administration company transmits the command, saying, 'Transmit the configuration information that is 'Mr. A's telephone number' to the terminal device of Mr. A. Confirming that the command is from the communication configuration and administration company having a trusted relationship, the terminal device of Mr. A executes the configuration information transmission command. The configuration information indicated by the configuration information transmission command is selected out of the configuration information stored in the terminal device of Mr. A, and the selected configuration information that is ' Mr. A's telephone number' is transmitted to the third server in company X.

The functional block diagram of the terminal device in the sixth embodiment is the same as the one shown in Fig. 26. The terminal device 2600 has the configuration information storage section 2601, the configuration information transmission order accepting section 2602, and the configuration information transmitting section 2603.

The configuration information storage section 2601 and the configuration information transmitting section 2603 perform the same processing as the third embodiment.

The configuration information transmission order accepting section 2602 accepts the configuration information transmission command, which is a command to transmit the configuration information accumulated in the configuration information storage section to the third server, from the second server. Herein, the configuration information transmission order is the one that the second server has obtained based on the first configuration request information containing the information regarding the transfer of the predetermined value from the third server (or it means the administrator of the third server, a person who conducts administration for the administrator, or the like. The same applies hereinafter).

To 'obtain' means to generate particular information in the device and to make the information be a usable state later, or to acquire the particular information from outside the device and to make the information be a usable state later. On the other hand, to 'accept' means to make only information that satisfies the predetermined requirements be a usable state, and to take it over to actual processing later. This is the point different from 'obtain' . Note that these should be used in the same meaning throughout the entire specification unless they particularly contradict.

The 'transfer of a predetermined value' is a value that company X pays to the communication configuration and administration company that has transmitted the configuration information transmission command to let company X know the configuration information of Mr. A. This value is not limited to money, but may be a right or the like to obtain any advantage.

For example, the right may be one to symbolize the right to receive a predetermined service, or obtain a lottery ticket or a prize. The 'information regarding the transfer of the value' is information whether or not the transfer of the value has been performed, or information of the value amount or the like.

The 'first configuration request information' contains the information regarding the transfer of the value. Then, in the case where company X wants to obtain the configuration information of the terminal of a third party (Mr. A) having no trusted relationship with itself, the information may be one to request the other party (communication configuration and administration company) having trust relationship with the third party (Mr. A) to obtain it.

On receiving the request, the communication configuration and administration company issues a command (configuration information transmission command) to Mr. A to urge him to transmit the configuration information of Mr. A to company X.

Note that when the configuration information transmission command is from a party with whom a trusted relationship has not been formed, he does not accept the configuration information transmission command as described above.

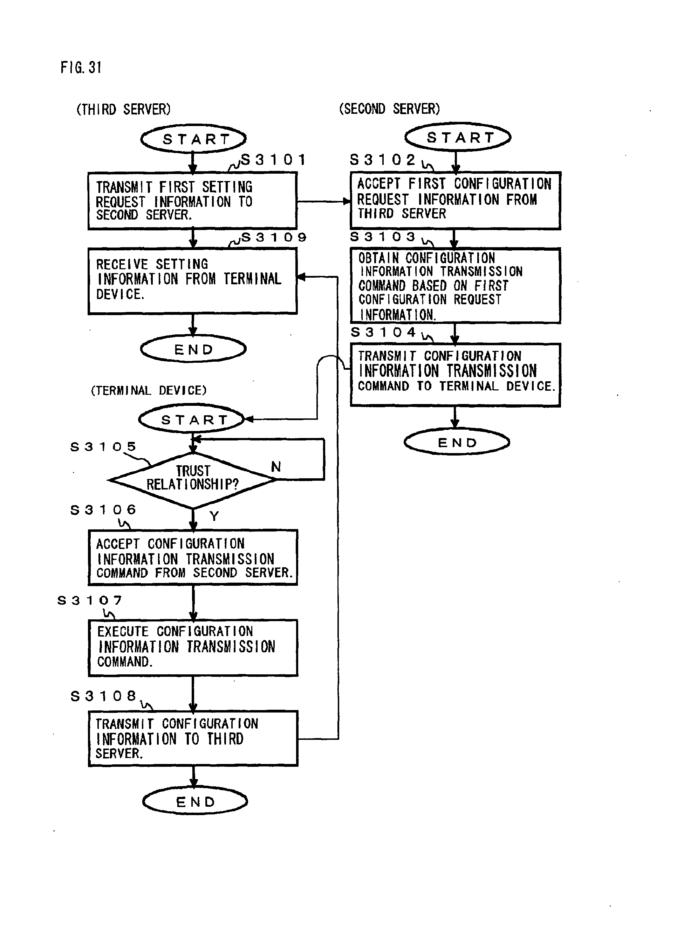

Fig. 31 shows the processing flow in the sixth embodiment. The communication processing in this embodiment includes the nine steps shown below.

Firstly, the third server transmits the first configuration request information to the second server at step S3101, and the second server accepts the first configuration request information from the third server at step S3102. Further, the second server obtains the configuration information transmission command based on the first setting request information that has been accepted at step S3103, and the second server transmits the configuration information transmission command to the terminal device at step S3104 . Then, it determines whether or not the transmission destination is a server having a trusted relationship at step S3105, and the terminal device accepts the configuration information transmission command from the second server at step S3106 when the determination result that it had a trusted relationship has been obtained (configuration information transmission command accepting step). The terminal executes the configuration information transmission command at step S3107, and transmits the configuration information to the third server at step S3108 (configuration information transmission step). Finally, the third server receives the configuration information from the terminal device at step S3109. Herein, when the second server accepts the first configuration request information from the third server, it confirms whether the payment has been made or not by the information regarding the transfer of the predetermined value, and the subsequent processing may be performed only when the payment has been made. The above-described processing can be executed by a program that allows a computer to execute it, and the program can be recorded into a computer-readable recording medium.

The seventh embodiment is a terminal device based on the sixth embodiment, which is characterized in that the first configuration request information is one that the third server transmitted to the second server.

The functional block of the terminal device in this embodiment is the same as the one described in Fig. 26. The terminal device 2600 has the configuration information storage section 2601, the configuration information transmission order accepting section 2602, and the configuration information transmitting section 2603.

The configuration information storage section 2601 and the configuration information transmitting section 2603 perform the same processing as the sixth embodiment.

The configuration information transmission command accepting section 2602 accepts the configuration information transmission command from the second server. Herein, the configuration information transmission command is one that the second server obtained based on the first configuration request information from the third server, which contains the information regarding the transfer of the predetermined value. Specifically, the first configuration request information is sent from the third server to the second server, and the terminal device sends the configuration information to the third server. In other words, the body that transmits the first configuration request information and the body that receives the configuration information are the same third server.

Alternatively, it may be a mode in which all of the transmission and receiving of the first configuration request information and the receiving of the configuration information are performed by the same body. In this entire specification, even if a plurality of servers are described in the embodiments, they may be the same server unless it causes contradiction.

The eighth embodiment is a terminal device based on the sixth embodiment, which is characterized in that the first setting request information is one that a fourth server transmitted to the second server.

The functional block of the terminal device in this embodiment has already been described using Fig. 26. The terminal device 2600 has the configuration information storage section 2601, the configuration information transmission command accepting section 2602, and the configuration information transmitting section 2603.

The configuration information storage section 2601 and the configuration information transmitting section 2603 perform the same processing as the sixth embodiment.

The configuration information transmission command accepting section 2602 accepts the configuration information transmission command from the second server. Herein, the configuration information transmission command is one that the second server obtained based on the first configuration request information from the fourth server, which contains the information regarding the transfer of the predetermined value. Specifically, the first configuration request information is sent from the fourth server to the second server, and then, the terminal device sends the configuration information to the third server. Herein, the third server and the fourth server are different. In other words, the body that transmits the first configuration request information and the body that receives the configuration information are the different servers.

As described, the server that transmits the first configuration request information and the server that receives the configuration information are made to be the different servers, which has the effect that the load to the server can be lightened comparing to the case where the same server performs the processing. Further, since there are cases where the fourth server mentioned here has to perform processing for the configuration information from a large number of terminal devices, a plurality of the fourth servers may exist to disperse the load among the fourth servers that should receive the configuration information. Specifically, there are cases where plural numbers of the fourth servers are in this embodiment exist.

The ninth embodiment is a terminal device that accepts the configuration information transmission command from the second server, which is based on value information containing the information regarding the transfer of the predetermined value.

The functional block of the terminal device in the ninth embodiment has already been described using Fig. 26. The terminal device 2600 has the configuration information storage section 2601, the configuration information transmission command accepting section 2602, and the configuration information transmitting section 2603.

The configuration information storage section 2601 and the setting information transmitting section 2603 perform the same processing as the sixth embodiment.

The configuration information transmission command accepting section 2602 accepts the configuration information transmission command, which is a command to transmit the configuration information stored in the configuration information storage section to the third server, from the second server. Herein, the configuration information transmission command is one that the section accepted from the second server based on the payment information containing the information regarding the transfer of the predetermined value (specifically, it is information regarding the fact that Mr. A who uses the terminal device gains the value from the communication configuration and administration company in exchange for the transmission action of the configuration information, for example).

Firstly, the second server that has received the first configuration request information issues the order (configuration information transmission order) to Mr. A having a trusted relationship to urge him to transmit the configuration information of Mr. A to company X that is a specified communication destination based on the first configuration request information. On receiving the command, the terminal device transmits the configuration information from the configuration information transmitting section.

At this time, the configuration information transmission command is accepted based on the value information ('b' shown in Fig. 30) containing the information regarding the transfer of the predetermined value or payment. In short, in transmitting the configuration information to company X, Mr. A obtains the value from the communication configuration and administration company.

The information regarding the payment is the 'payment information', and it contains the information regarding the transfer of the predetermined value. The transfer of the predetermined value is not only limited to the exchange of money but may include any advantage or consideration.

The transfer of the value may be information that it has already been made, or may be information showing that the predetermined value will be paid, which is information showing the schedule of the value payment.

The information showing the schedule of the value payment is one to clarify that company X has intention to settle the account and pay the value after the transmission of 'Mr. A's telephone number'.

Further, in the case where the relationship between the configuration information to be transmitted and the predetermined value is fixed by a particular agreement, there may be identifying information that specifies the value or payment. It is enough that the value can be indirectly identified by the identifying information, and there are cases where the information to identify configuration information' simply corresponds to the payment information. The payment information may be contained in the configuration information transmission command, or may be one that the terminal device obtains separately from the configuration information transmission command. When the terminal device obtains the payment information separately from the configuration information transmission command, it may be acquired from the second server (of the communication configuration and administration company) , or may be acquired from another server or the like. Further, 'based on the payment information' may be a configuration where a server that transmits the configuration information transmission command transmits the configuration information transmission command 'based on the payment information' other than the case where the terminal device receives the payment information and receives the configuration information transmission command based on the received payment information.

Further, since the communication configuration and administration company gives the value or payment to Mr. A at this point, the configuration may be one where a trusted relationship is determined based on the payment information regarding the value. Whether the configuration information transmission order that has been transmitted is an unauthorized transmission by a third party or not is proven through determining whether the payment information is added to the transmitted setting information transmission order or not.

The processing flow by the terminal device in the ninth embodiment has already been shown in the sixth embodiment. However, instead of the processing of determining trust relationship at step S3105, the terminal device, when accepting the configuration information transmission command from the second server, performs the processing to confirm whether the payment has been made by the payment information and may perform the subsequent processing only when the payment has been made.

The tenth embodiment is a terminal device where the user transmits the configuration information of his/her own terminal device via the second server having a trusted relationship regardless of the payment according to the request from the third server having no established trust relationship. What is different from the third embodiment is that the second server does not refer to information from outside, which becomes a trigger, to transmit the configuration information transmission command in the third embodiment. On the other hand, this embodiment has a configuration where another second server transmits the configuration information transmission command based on the information from outside, which becomes the trigger.

The functional block of the terminal device in the tenth embodiment is the same as the one described in Fig. 26. The terminal device 2600 has the configuration information storage section 2601, the configuration information transmission command accepting section 2602, and the configuration information transmitting section 2603.

The configuration information storage section 2601 and the configuration information transmitting section 2603 perform the same processing as the sixth embodiment.

This embodiment is characterized in that the configuration information transmission command accepting section has accepted the configuration information transmission command, which is one that the second server obtained based on second configuration request information that is a request regarding the transmission of the configuration information, from the second server.

The eleventh embodiment is a second server based on the fifth, sixth, and ninth embodiment, which is characterized in that the configuration information transmission command contains the communication destination information of the third server.

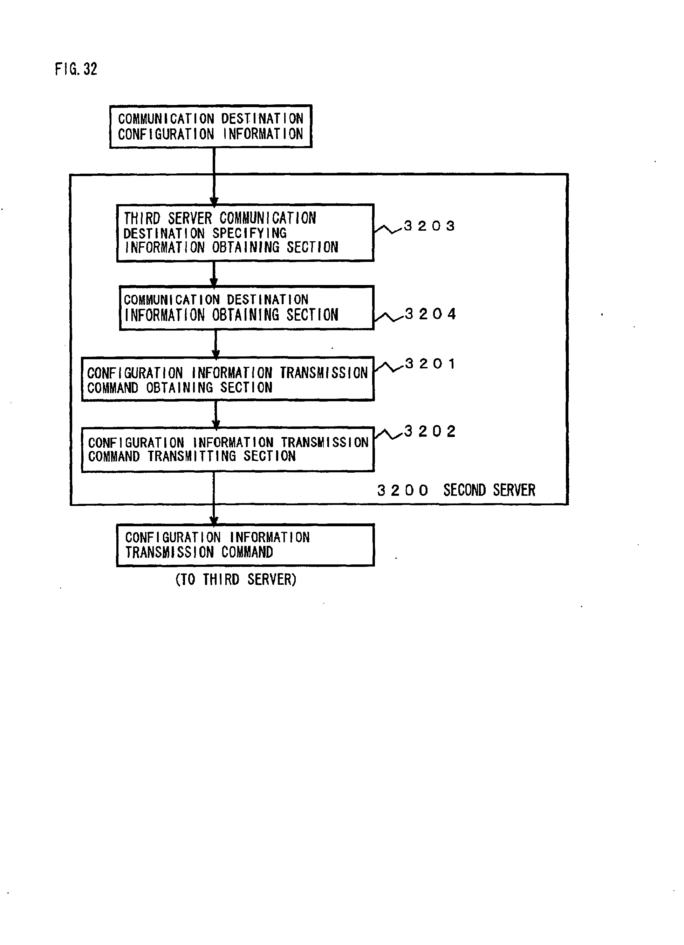

A second server 3200 shown in Fig. 32 has a configuration information transmission command obtaining section 3201, a configuration information transmission command transmitting section 3202, a third server communication destination specifying information obtaining section 3203, and further, a communication destination information obtaining section 3204.

Fig. 32 is the view showing an example of the functional block of the second server of this embodiment.

The third server communication destination specifying information obtaining section 3203 obtains the communication destination specifying information that is information to specify the communication destination address of the third server.

The 'communication destination specifying information' is information to specify the communication destination address of the third server. Herein, the server of the communication destination is not only limited to the third server that has made a setting request but may be an arbitrary server. The communication destination address may be fixedly indicated by the URI, URL, or the like, or may be dynamically changed. The usage in the case of changing dynamically has already been described. Specifically, it is the case where the second server changes communication destination to the most suitable server according to the line load status of the server that is the connection destination, the operation stop status of the server due to failure, maintenance, inspection or the like, or the case where a closer access point has been newly constructed.

Furthermore, the communication destination specifying information may be previously stored in the second server, or the third server may transmit it after the first configuration request information contains it. For example, an account name and passwords are stored in the second server as the communication destination specifying information. Moreover, a notification destination address of the third server is also stored in combination with the two. The third server transmits the account name and the passwords after allowing the first configuration request information to contain them. The obtained communication destination specifying information is communicated to the communication destination information obtaining section.

The communication destination information obtaining section 3204 obtains the communication destination information containing the communication destination address of the third server based on the communication destination specifying information obtained by the third server communication destination specifying information obtaining section.

In addition, the communication destination information may contain information of a line in which it goes through or information of the type or the like of the third server other than the communication destination address of the third server. The obtained communication destination information containing the communication destination address of the third server is passed to the configuration information transmission command obtaining section.

The configuration information transmission command obtaining section 3201 and the configuration information transmission command transmitting section 3202 perform the same processing as the fifth embodiment. However, the configuration information transmission command contains the communication destination information containing the communication destination address of the third server, which the communication destination information obtaining section has obtained.

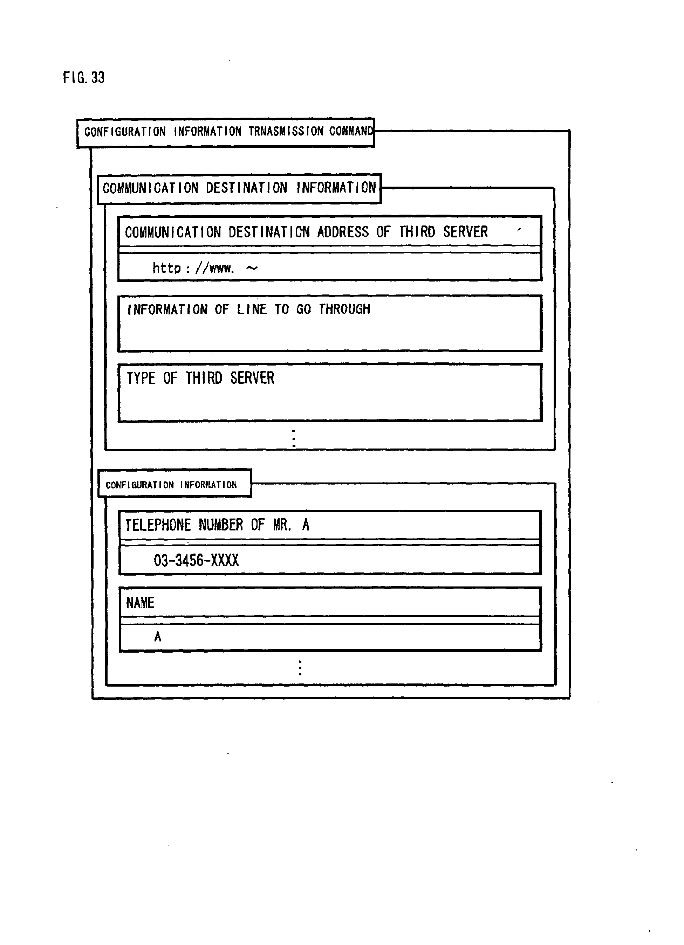

Fig. 33 shows the inclusive relation of the configuration information transmission command transmitted from the second server. The configuration information transmission command is at the most superior position, and it contains the communication destination information and other necessary configuration information. Furthermore, the communication destination information contains the information such as the communication destination address of the third server.

The twelfth embodiment is characterized in that the second server, in the case where the terminal device approves to transmit the configuration information to the third server, obtains the configuration information transmission command based on information regarding the approval.

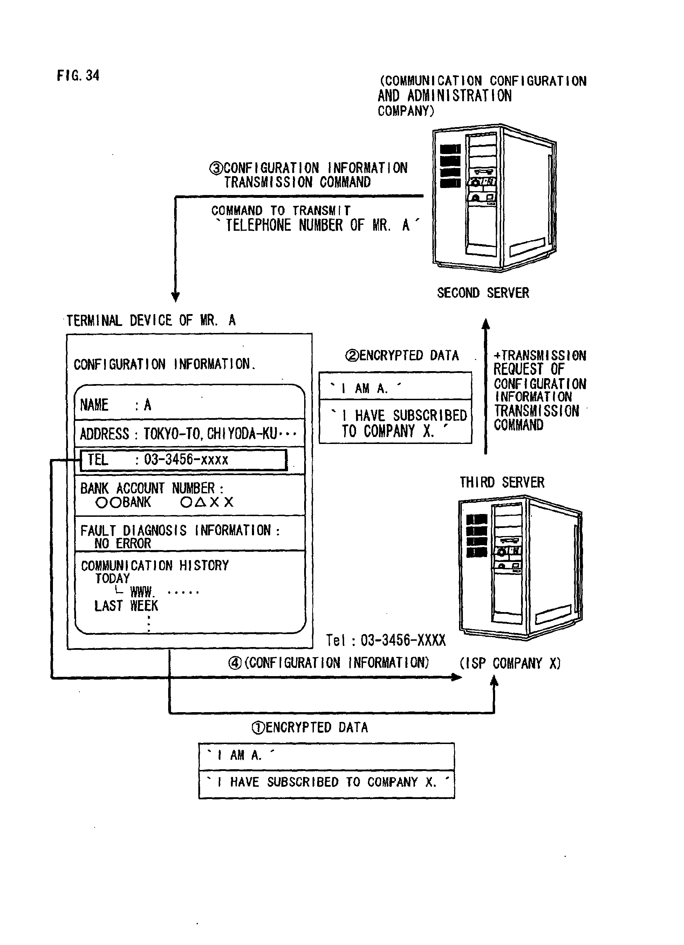

Fig. 34 schematically shows an example of this embodiment. It is assumed that Mr. A has an intention to subscribe to company X that is the ISP. This is the case where Mr. A approves transmission of his own configuration information to company X. Since there is a problem of eavesdropping, alteration, or the like if the information of approval is directly transmitted without encryption, an example of encryption by the public key encryption is shown here.

Firstly, it is assumed that the terminal device of Mr. A already has the public key of the communication configuration and administration company. By using the public key, Mr. A encrypts the information regarding the approval of the signature of A that ' I ' m A' or 'This is the authentic data that A created' and the message that 'I have subscribed to company X' as one set. Then, the encrypted data are sent to the communication configuration and administration company via company X. (Herein, although the encrypted data may be directly sent to the communication configuration and administration company without going through company X, there is no fear of alteration, eavesdropping, or the like even if it is sent via company X because company X does not have a key capable of decrypting the data.)

The communication configuration and administration company that has received the encrypted data can decrypt the information regarding the approval, which has been sent, by a private key corresponding to the public key. Only the communication configuration and administration company has this private key, and it is only the communication configuration and administration company that can decrypt the encrypted data.

The communication configuration and administration company can know the signature of A that ' I ' m A' or 'This is the authentic data that A created' and the message that ' I have subscribed to company X'. Then, when the communication configuration and administration company confirms that Mr. A approves the transmission of his own configuration information to company X, it accepts the configuration request from company X. It does not accept the configuration request from company X unless the approval can be confirmed. Alternatively, the second server may be designed not to transmit the order to Mr. A even if it accepts it. For example, in the case where the second server has received the information regarding the signature of Mr. A and the subscription that 'I subscribed to company X' but it is found out that the transmission has not been approved (the signature of Mr. A is unauthorized) when the information is at the stage of being transmitted to Mr. A, it is not transmitted. Even if the information regarding the approval has been sent not from Mr. A but from the third server in company X, the communication configuration and administration company accepts the transmission request of the configuration information transmission command to Mr. A if it is clear that Mr. A has approved it.

By receiving and executing the configuration information transmission command based on the request accepted in this manner, the terminal device of Mr. A transmits the configuration information to company X. Then, company X that has received the configuration information can perform configuration necessary for the terminal device of Mr. A to receive the Internet service, for example.

The functional block of the terminal device in the twelfth embodiment is the same as the one described in Fig. 26. The terminal device 2600 has the configuration information storage section 2601, the configuration information transmission command accepting section 2602, and the configuration information transmitting section 2603.

The configuration information storage section 2601 and the configuration information transmitting section 2603 perform the same processing as the sixth embodiment.

The configuration information transmission command accepting section 2602 accepts the configuration information transmission command from the second server. Although the configuration information transmission command is a command to allow the terminal device to transmit the configuration information stored in the configuration information storage section to the third server, this embodiment is characterized in that the command has been obtained from the second server based on the information regarding the approval that the terminal device transmits the configuration information to the third server (information regarding the above-described encrypted approval).

The second server accepts the transmission request of the configuration information transmission command on the condition that the terminal device approves the transmission of his own configuration information to the third server. Subsequently, the second server transmits the configuration information transmission command to the terminal device. The configuration information transmission command accepting section accepts the configuration information transmission command.

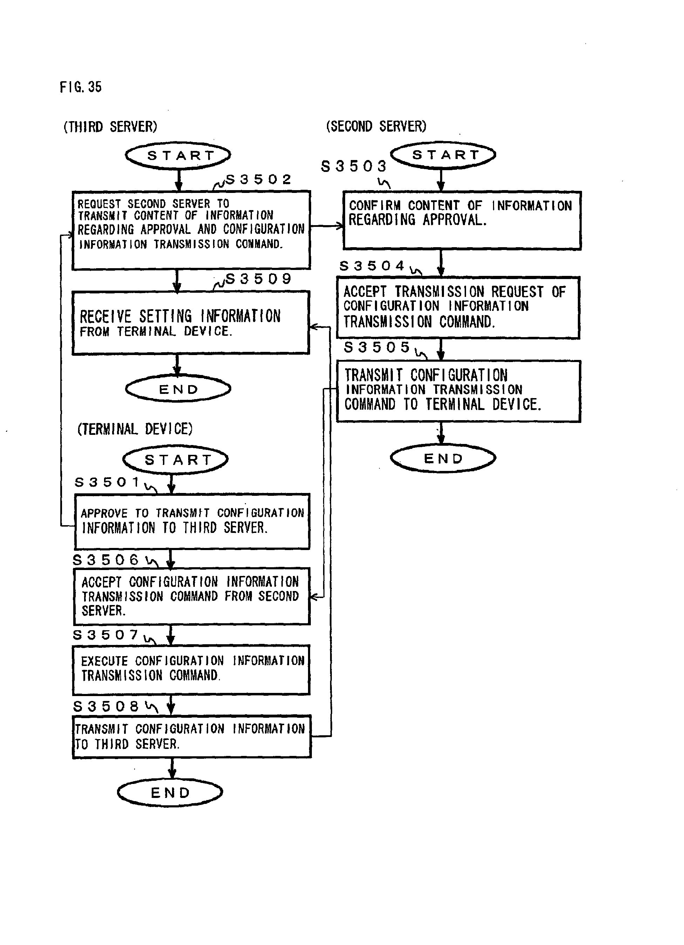

Fig. 35 shows the flow of the communication processing in the twelfth embodiment. The communication processing in this embodiment includes the nine steps shown below.

Firstly, the terminal device approves to transmit its configuration information to the third server at step S3501, the third server transmits the information regarding the approval to the second server and also requests it to transmit the configuration information transmission command to the terminal device at step S3502. The second server confirms the content of the information regarding the approval at step 53503, and accepts the request to transmit the configuration information transmission command to the terminal device at step S3504. Subsequently, the second server transmits the configuration information transmission command to the terminal device at step S3505. Then, the terminal device accepts the configuration information transmission command from the second server at step S3506 (configuration information transmission command accepting step), executes the configuration information transmission command at step S3507, and transmits the configuration information to the third server at step S3508 (configuration information transmission step). Finally, the third server receives the configuration information from the terminal device at step S3509. The above-described processing can be executed by a program that allows a computer to execute it, and the program can be recorded into a computer-readable recording medium.

As it is clear from the foregoing, the effect of the twelfth embodiment is that the terminal device and the second server, which have a trusted relationship, can transmit with each other approval information that is information having high confidentiality by using a symmetric key encryption not to mention the public key encryption system, because it is configured that only the second server can decrypt and determines the information regarding the approval.

The thirteenth embodiment is a terminal device characterized in that it, in the case where the terminal device approves to transmit the configuration information to the third server, accepts the configuration information transmission command from the second server based on the information regarding the approval. What is different from the twelfth embodiment is that the second server obtains the configuration information transmission order based on the information regarding the approval in the twelfth embodiment, while the terminal device accepts the configuration information transmission command based on the information regarding the approval in this embodiment.

The functional block of the terminal device in the thirteenth embodiment is the same as the one described in Fig. 26. The terminal device 2600 has the configuration information storage section 2601, the configuration information transmission command accepting section 2602, and the configuration information transmitting section 2603.

The configuration information storage section 2601 and the configuration information transmitting section 2603 perform the same processing as the sixth embodiment.

The configuration information transmission command accepting section 2602 accepts the configuration information transmission command form the second server based on the information regarding the approval that the terminal itself transmits the configuration information to the third server. Specifically, the terminal device does not accept the configuration information transmission command from the second server without the information regarding the approval. The terminal device accepts the configuration information transmission command from the second server only when the information regarding the approval exists, that is, information that the approval has been made, in particular. The information regarding the approval goes out from the terminal device and returns to the terminal device.

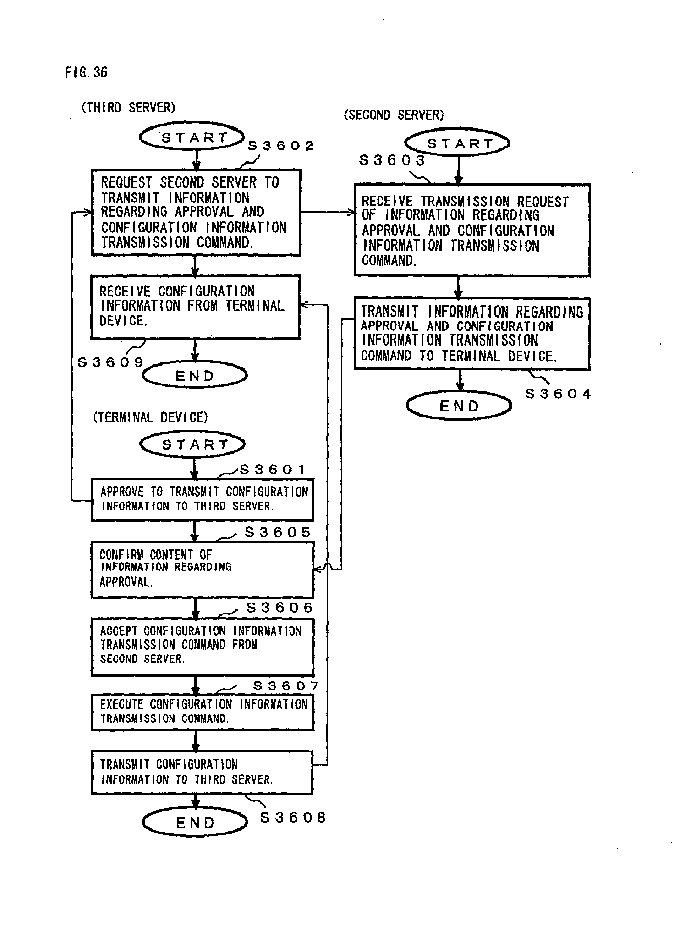

Fig. 36 shows the flow of the communication processing in the thirteenth embodiment. The communication processing in this embodiment includes the nine steps shown below. Firstly, the terminal device approves the transmission of its configuration information to the third server and notifies the third server of this approval (approval by the terminal device) at step S3601. Then, the third server transmits the information regarding the approval to the second server and also requests it to transmit the configuration information transmission command to the terminal device (transmission of the information regarding the approval, request of the configuration information transmission command) at step S3602. The second server receives the request to transmit the configuration information transmission command to the terminal device from the third server at step 53603, and the second server transmits the configuration information transmission command and the information regarding the approval to the terminal device at step S3604.

The terminal device confirms the content of the information regarding the approval at step S3605. Then, the terminal device accepts the configuration information transmission command from the second server based on the information regarding the approval at step 53506 (configuration information transmission command accepting step). Regarding the processing of the subsequent steps that are step S3607 (executing the configuration information transmission command), step S3608 (configuration information transmission step), and step S3609 (receiving the configuration information) , the same processing as steps 53507 to 53509 is performed respectively. The above-described processing can be executed by a program that allows a computer to execute it, and the program can be recorded into a computer-readable recording medium.

In the thirteenth embodiment, one that can decrypt the information regarding the approval may be the terminal device itself. Therefore, the terminal device encrypts and decrypts using an encryption key that the terminal stores, so that it is advantageous that procedure of publicizing the public key necessary when using the public key encryption system or the like, sharing a symmetric key necessary when using the symmetry key encryption system, or the like becomes unnecessary.

In the fourteenth embodiment, information to specify a command is obtained via the terminal device in allowing the terminal device to execute a predetermined command, and the terminal device is allowed to execute the predetermined command based on the information.

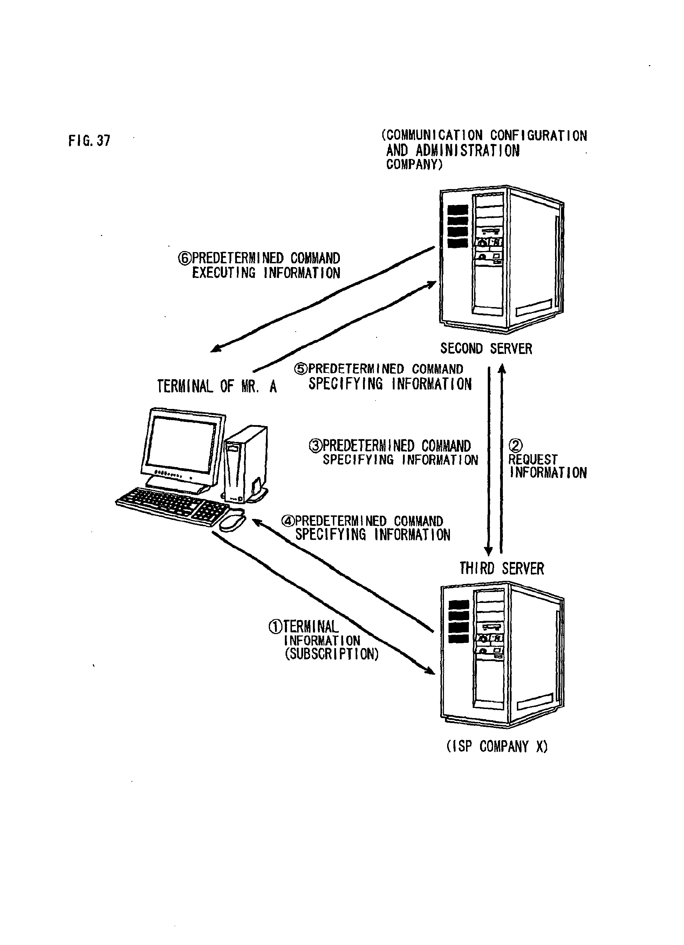

Fig. 37 schematically shows an example of this embodiment. It is assumed that Mr. A has an intention to subscribe to company X that is the ISP. Then, company X needs to write communication configuration information to the terminal device of Mr. A to provide the service. For the writing of the communication configuration information, an action (processing) that Mr. A's terminal device approves writing into itself is necessary.

Then, Mr. A connects to a web page provided from the third server in company X first, and subscribes to it, for example. The fact that Mr. A has subscribed to it is informed to the third server in company X through transmitting the ID or the like (terminal information) of Mr. A's terminal device (procedure 1) . The third server requests the communication configuration and administration company to transmit the order, saying, 'Make necessary configuration information (URI of the third server, for example) become possible to be written into the terminal device of Mr. A' (procedure 2). The second server generates the predetermined command (command to perform internal processing to write into Mr. A's terminal device become possible) for the request. Subsequently, a reception number or the like (predetermined command specifying information) that is information to specify the predetermined command is transmitted to the third server (procedure 3) . The third server communicates the predetermined command specifying information to the terminal device (procedure 4) . The reason why the second server, which received the request information, does not execute the request immediately and further transmits the predetermined command specifying information in procedures 3 and 4 is because the predetermined command is executed after confirming the intention of Mr. A again.

The terminal device communicates the predetermined command specifying information to the second server to request to obtain the predetermined command (procedure 5). This can be performed in arbitrary timing of Mr. A. The subsequent processing is performed in the timing when procedure 5 has started.

The second server communicates necessary information (predetermined command executing information) for executing a predetermined command corresponding to the predetermined command specifying information to the terminal device (procedure 6). Thereafter, the terminal device executes the predetermined command. Regarding execution of the predetermined command, there could be various kinds of processing such that the fourth server is specified and the information is transmitted to the server, the terminal receives the information from the fourth server, and the like other than the processing to permit writing or rewriting from outside into the configuration information that the terminal itself has as shown in the example.

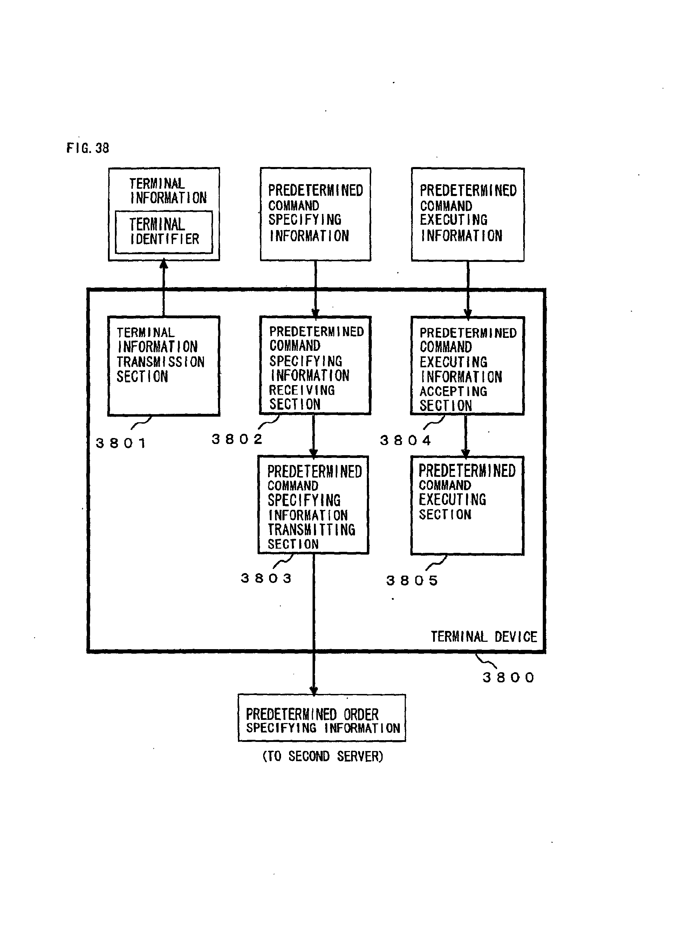

A terminal device 3800 of the fourteenth embodiment shown in Fig. 38 has a terminal information transmitting section 3801, a predetermined command specifying information receiving section 3802, a predetermined command specifying information transmitting section 3803, a predetermined command executing information accepting section 3804, and a predetermined command executing section 3805. Fig. 38 is the view showing an example of the terminal device of this embodiment.

The terminal information transmitting section 3801 transmits the terminal information. The 'terminal information' is information having the terminal identifier that identifies the terminal device. The 'terminal identifier' is used to identify the terminal device, which should execute a predetermined command, by those who made a request when receiving the request of executing the predetermined command.

The predetermined command specifying information receiving section 3802 receives the predetermined command specifying information that is information to specify the predetermined command. The received predetermined order specifying information is transmitted from the predetermined command specifying information transmitting section. This transmission accepts the predetermined command executing information that the terminal uses to execute the predetermined command.

Herein, the 'predetermined command' could be a command to make the terminal perform each kind of processing such as the processing to permit writing or rewriting from outside into the configuration information that the terminal itself has, as described above, the processing to specify a server to transmit information to the server, and the processing to receive information from a particular server.

The predetermined command specifying information received by the predetermined command specifying information receiving section is associated with the predetermined command executing information in the second server based on the request information that requests the terminal device identified by the terminal identifier to execute the predetermined command. This request information is one that the particular server, which requests execution of the predetermined command, has sent to the second server, for example.

The 'predetermined command specifying information transmitting section' transmits the predetermined command specifying information received by the predetermined command specifying information receiving section. The transmission destination is a server (such as the second server) or the like that obtains (generates) the predetermined command executing information, which is a command to make the terminal itself execute the predetermined command based on the predetermined specifying information, and transmits it to the terminal itself. The reason why the predetermined command specifying information is transmitted via the terminal device itself is to reduce a possibility of causing adverse effect as little as possible such that a third party having malicious intent counterfeits the predetermined command to harm the terminal itself or harm another company. This is because the terminal can confirm the predetermined command specifying information by itself and it is easy to remove the adverse effect based on predetermined command specifying information that the terminal itself has never sent.

Further, the terminal device itself can control the timing to transmit the predetermined command specifying information, so that it can select timing to execute the predetermined command by itself according to various kinds of circumstances of the terminal device. This is because the predetermined command is never executed in the terminal device unless the terminal device itself transmits the predetermined command specifying information. The predetermined command executing information is transmitted on the condition that the terminal device transmits the predetermined command specifying information.

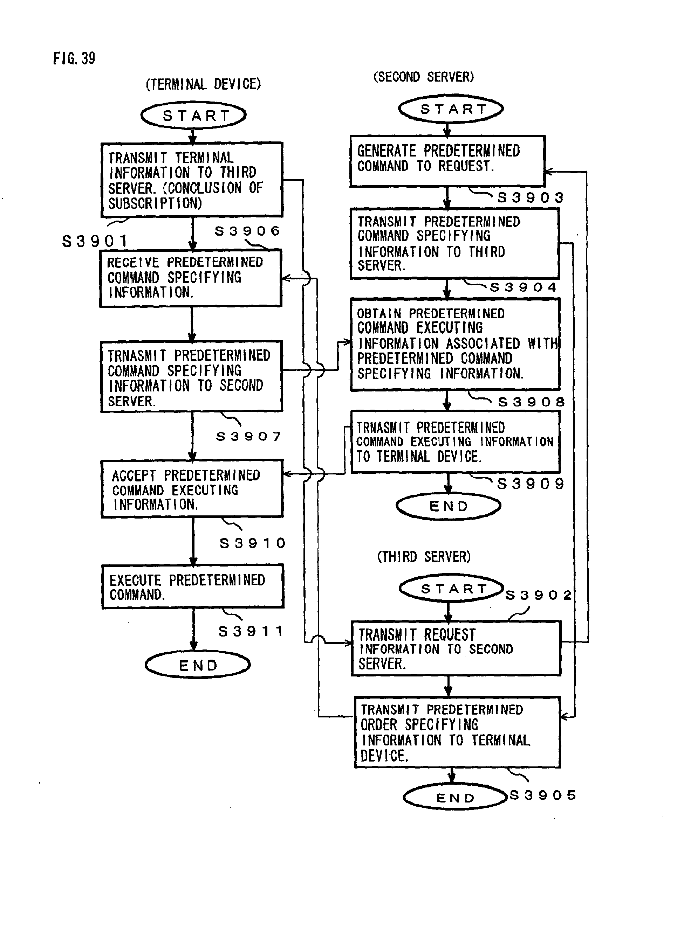

Fig. 39 shows the flow of the processing in the fourteenth embodiment. The processing in this embodiment includes the eleven steps shown below. Firstly, the terminal device transmits the terminal information to a particular server to subscribe to it or the like at step 53901 (terminal information transmission step). The server transmits the request information to the second server at step S3902. This request information is information to specify the processing to request execution to the terminal device. The second server generates the predetermined command to the request at step S3903 (the predetermined command and the identification information of the terminal device are associated and held here). The second server transmits the predetermined command specifying information that specifies the predetermined command to the server at step S3904. The server transmits (or transfers) the predetermined command specifying information to the terminal device at step S3905. The terminal device receives the predetermined command specifying information at step S3906 (predetermined command specifying information receiving step), and terminal device transmits the predetermined command specifying information to the second server at step 53907 (predetermined command specifying information transmission step). At this point, terminal information to identify the terminal device may be sent simultaneously. Next, the second server obtains the predetermined command executing information specified based on the predetermined command specifying information (this is associated with the terminal information which is information to identify the terminal device) at step S3908. Herein, since the predetermined command specifying information is associated with the terminal information, the predetermined command executing information is also associated with the terminal information automatically. The second server transmits the predetermined command executing information to the associated terminal device at step S3909. Furthermore, the terminal device accepts the predetermined command executing information at step 53910 (predetermined command executing information step), and executes the predetermined command according to the accepted predetermined command executing information at step 3911 (predetermined command executing step). The above-described processing can be executed by a program that allows a computer to execute it, and the program can be recorded into a computer-readable recording medium.

The fifteenth embodiment is a terminal device based on the fourteenth embodiment, which is characterized in that the predetermined command is to transmit the configuration information that the terminal itself stores to a predetermined server.

The functional block of the terminal device in this embodiment is the same as the one shown in Fig. 38. The terminal device 3800 of this embodiment has the terminal information transmitting section 3801, the predetermined command specifying information receiving section 3802, the predetermined command specifying information transmitting section 3803, the predetermined command executing information accepting section 3804, and the predetermined command executing section 3805. The terminal information transmitting section 3801, the predetermined command specifying information receiving section 3802, the predetermined command specifying information transmitting section 3803, and the predetermined command executing information accepting section 3804 perform the same processing as the twelfth embodiment.

The predetermined command executing section 3805 executes the predetermined command accepted by the predetermined command executing information accepting section. The predetermined command is to transmit the configuration information that the terminal itself stores to the predetermined server. Specifically, the terminal device can transmit the necessary configuration information to a server other than company X by execution.

The sixteenth embodiment is a terminal device based on the fourteenth embodiment, which is characterized in that the predetermined command is to configure the configuration information based on the communication information that is information to communicate with the predetermined server.

The functional block of the terminal device in this embodiment is the same as the one shown in Fig. 38 . The terminal device 3800 of this embodiment has the terminal information transmitting section 3801, the predetermined command specifying information receiving section 3802, the predetermined command specifying information transmitting section 3803, the predetermined command executing information accepting section 3804, and the predetermined command executing section 3805.

The terminal information transmitting section 3801, the predetermined command specifying information receiving section 3802, the predetermined command specifying information transmitting section 3803, and the predetermined command executing information accepting section 3804 perform the same processing as the twelfth embodiment.

In the predetermined command executing section 3805, the configuration information is set to the predetermined command, which has been accepted by the predetermined command executing information accepting section, based on the communication information. The communication information is information to communicate with the predetermined server, which is the communication destination address or the type of the predetermined server, the information of a line which it goes through, or the like. By executing the predetermined command based on the communication information, the terminal device can communicate with the predetermined server. Further, the configuration includes addition, change, and deletion. The section also can perform processing related to maintenance such as addition of a new server, or the like.

As described above, in the first and second embodiments, communication information, which is allocated for each terminal device by a network connection company such as the Internet service provider, is can be performed not by remote processing from the network connection company but by a server of a highly reliable company that administers the configuration of the communication information, and thus safe and simple network configuration is made possible in the terminal device.

Further, in the third to sixteenth embodiments, transmission or the like of the configuration information in the terminal device can be performed through a communication configuration and administration company, so that the terminal device does not need to establish a trusted relationship with each destination to which the configuration information is sent, and establishing a trusted relationship only with the communication configuration and administration company is enough. Therefore, the configuration information containing confidential information or the like in the terminal device can be easily administered, and the terminal device can easily gain a predetermined value based on the information.

Moreover, by introducing a concept that is the communication configuration and administration company, unified administration mechanism of the configuration information can be realized, and it is possible to build a system from which the communication configuration and administration company itself profits.

## Claims

1. A terminal device, comprising:
a terminal information transmitting section that transmits terminal information having a terminal identifier that identifies the terminal device;
an obtaining order accepting section that accepts communication information obtaining command to obtain communication information to communicate with a first server;
a communication information obtaining section that executes the communication information obtaining command accepted by said obtaining command accepting section to obtain the communication information from a second server; and
a communication information storing section that stores the communication information obtained by said communication information obtaining section.

2. The terminal device according to Claim 1, further comprising:
an error processing section that outputs or stores information showing that it is impossible to obtain the communication information in the case where the communication information obtaining command accepted by said obtaining order accepting section is information showing that is impossible to obtain the communication information.

3. The terminal device according to any one of Claims 1 and 2, wherein
said communication information obtaining command contains communication destination information to communicate and connect to the second server,
said communication information obtaining section includes first processing means that obtains said communication destination information and does not perform writing, and second processing means that accesses to the second server based on said communication destination information to obtain the communication information, and
said first processing means and said second processing means are separated.

4. A data processing system having a terminal device, a first server, and a second server, wherein
said terminal device comprises a terminal information transmitting section that transmits terminal information to said first server, an obtaining command accepting section that accepts a communication information obtaining command to obtain the communication information to communicate with said first server, from said second server, a communication information obtaining section that executes the communication information obtaining command accepted by said obtaining command accepting section to obtain the communication information from said second server, and a communication information storage section that stores the communication information obtained by said communication information obtaining section,
said first server comprises a first terminal information receiving section that receives terminal information from said terminal device, a first terminal information transmitting section that transmits at least part of the terminal information received by said first terminal information receiving section to said second server, a first communication information obtaining command storage section that stores the communication information obtaining command, a first communication information obtaining command transmission section that transmits the communication information obtaining command stored in said first communication information obtaining command storage section to the terminal device, a first communication information generating section that generates the communication information based on at least part of the terminal information received by said first terminal information receiving section, and a first communication information transmitting section that transmits the communication information generated by said first communication information generating section to the second server, and
said second server comprises a second communication information receiving section that receives the communication information transmitted from said first communication information transmitting section, a second communication information storage section that stores the communication information received by said second communication information receiving section, and a second communication information transmitting section that transmits the communication information stored in said second communication information storage section to said terminal device.

5. A first server that comprises the data processing system according to Claim 4.

6. A second server that comprises the data processing system according to Claim 4.

7. A data processing system having a terminal device, a first server, and a second server, wherein
said terminal device comprises a terminal information transmitting section that transmits terminal information to said first server, an obtaining command accepting section that accepts a communication information obtaining command to obtain the communication information that is information to communicate with said first server, from said second server, a primary communication information obtaining section that obtains primary communication information for generating secondary communication information to communicate with the first server, from said first server, a primary communication information transmitting section that transmits the primary communication information obtained by said primary communication information obtaining section to the second server, a secondary communication information obtaining section that executes said communication information obtaining order to obtain secondary communication information from said second server, and a communication information storage section that stores the secondary communication information obtained by said secondary communication information obtaining section,
said first server comprises a first terminal information receiving section that receives terminal information from said terminal device, a first primary communication information generating section that generates the primary communication information based on at least part of the terminal information received by said first terminal information receiving section, a first primary communication information transmitting section that transmits the primary communication information generated by said first primary communication information generating section to said terminal device, a first communication information obtaining command storage section that stores the communication information obtaining command, and a first communication information obtaining command transmission section that transmits the communication information obtaining command stored in said first communication information obtaining command storage section to the terminal device, and
said second server comprises a second primary communication information receiving section that receives the primary communication information from said terminal device, a second secondary communication information generating section that generates secondary communication information based on the primary communication information received by said second primary communication information receiving section, a second determination section that determines transmission validity of the secondary communication information based on the primary communication information received by said second primary communication information receiving section, and a second secondary communication information transmitting section that transmits the secondary communication information to said terminal based on the determination of said second determination section.

8. A first server that comprises the data processing system according to Claim 7.

9. A second server that comprises the data processing system according to Claim 7.

10. A communication information configuration method, comprising the steps of:
transmitting terminal information having a terminal identifier that identifies a terminal device;
accepting a communication information obtaining command to obtain communication information to communicate with a first server;
executing said accepted communication information obtaining command to obtain the communication information from a second server; and
storing said obtained communication information.

11. A computer-readable recording medium, wherein
said medium records the steps of: transmitting terminal information having a terminal identifier that identifies a terminal device; accepting a communication information obtaining command to obtain communication information to communicate with a first server; executing said accepted communication information obtaining command to obtain the communication information from a second server; and storing said obtained communication information, in a computer-executable manner.

12. A communication information configuration method, comprising the steps of:
transmitting terminal information to said first server at a terminal device;
accepting a communication information obtaining command to obtain communication information to communicate with said first server, from said second server;
executing said accepted communication information obtaining command to obtain the communication information from said second server;
storing said obtained communication information;
receiving terminal information from said terminal device at the first server;
transmitting all or a part of the received terminal information to said second server;
storing said communication information obtaining command;
transmitting said stored communication information obtaining command to the terminal device;
generating the communication information based on at least part of the received terminal information;
transmitting said generated communication information to the second server;
receiving said transmitted communication information at the second server;
storing said received communication information; and
transmitting the stored communication information to said terminal device in response to a request of communication information from said terminal device.

13. A data processing method, comprising the steps of:
transmitting terminal information to a first server at a terminal device;
accepting a communication information obtaining command that is a command to obtain communication information to communicate with said first server, from a second server;
obtaining primary communication information for generating secondary communication information to communicate with the first server, from said first server;
transmitting the primary communication information obtained by said primary communication information obtaining section to the second server;
executing said communication information obtaining command to obtain the secondary communication information from said second server;
storing said secondary communication information;
receiving the terminal information from said terminal device at said first server;
generating the primary communication information based on at least a part of said received terminal information;
transmitting said generated primary communication information to said terminal device; and
transmitting the stored communication information obtaining command to the terminal device, wherein
said second server comprises the steps of receiving the primary communication information from said terminal device, generating secondary communication information based on said received primary communication information, determining transmission validity of the secondary communication information based on said received primary communication information, and transmitting the secondary communication information to said terminal based on said determination.

14. A terminal device, comprising:
an obtaining command accepting section that accepts communication information obtaining command to obtain communication information to communicate with a first server;
a communication information obtaining section that executes the communication information obtaining command accepted by said obtaining command accepting section to obtain the communication information from a second server; and
a communication information storage section that stores the communication information obtained by said communication information obtaining section.

15. The terminal device according to Claim 14, further comprising:
an error processing section that outputs or stores information showing that it is impossible to obtain the communication information in the case where the communication information obtaining command accepted by said obtaining command accepting section is information showing that is impossible to obtain the communication information.

16. The terminal device according to any one of Claims 14 and 15, wherein
said communication information obtaining command contains communication destination information to communicate and connect to the second server,
said communication information obtaining section includes first processing means that obtains said communication destination information and does not perform writing, and second processing means that accesses to the second server based on said communication destination information to obtain the communication information, and
said first processing means and said second processing means are separated.

17. A data processing system that consists of a terminal device, a first server, and a second server, wherein
said terminal device comprises an obtaining command accepting section that accepts a communication information obtaining command to obtain communication information to communicate with said first server, from said second server, a communication information obtaining section that executes the communication information obtaining command accepted by said obtaining command accepting section to obtain the communication information from said second server, and a communication information storage section that stores the communication information obtained by said communication information obtaining section,
said first server comprises a first communication information obtaining command storing section that stores the communication information obtaining command, a first communication information obtaining command transmission section that transmits the communication information obtaining command stored in said first communication information obtaining command storage section to the terminal device, a first communication information generating section that generates the communication information, and a first communication information transmitting section that transmits the communication information generated by said first communication information generating section to the second server, and
said second server comprises a second communication information receiving section that receives the communication information transmitted from said first communication information transmitting section, a second communication information accumulating section that stores the communication information received by said second communication information receiving section, and a second communication information transmitting section that transmits the communication information stores in said second communication information storing section to said terminal device.

18. A first server that comprises the data processing system according to Claim 17.

19. A second server that comprises the data processing system according to Claim 17.

20. A data processing system having a terminal device, a first server, and a second server, wherein
said terminal device comprises an obtaining command accepting section that accepts a communication information obtaining command to obtain communication information to communicate with said first server, from said second server, a primary communication information obtaining section that obtains primary communication information for generating secondary communication information to communicate with the first server, from said first server, a primary communication information transmitting section that transmits the primary communication information obtained by said primary communication information obtaining section to the second server, a secondary communication information obtaining section that executes said communication information obtaining command to obtain secondary communication information from said second server, and a communication information storage section that stores the secondary communication information obtained by said secondary communication information obtaining section,
said first server comprises a first primary communication information generating section that generates the primary communication information, a first primary communication information transmitting section that transmits the primary communication information generated by said first primary communication information generating section to said terminal device, a first communication information obtaining command storage section that stores the communication information obtaining command, and a first communication information obtaining command transmission section that transmits the communication information obtaining command stored in said first communication information obtaining command storage section to the terminal device, and
said second server comprises a second primary communication information receiving section that receives the primary communication information from said terminal device, a second secondary communication information generating section that generates secondary communication information based on the primary communication information received by said second primary communication information receiving section, a second determination section that determines transmission validity of the secondary communication information based on the primary communication information received by said second primary communication information receiving section, and a second secondary communication information transmitting section that transmits the secondary communication information to said terminal based on the determination of said second determination section.

21. A first server that comprises the data processing system according to Claim 20.

22. A second server that comprises the data processing system according to Claim 20.

23. A communication information configuration method, comprising the steps of:
accepting a communication information obtaining command to obtain communication information to communicate with a first server;
executing said accepted communication information obtaining command to obtain the communication information from a second server; and
storing said obtained communication information.

24. A computer-readable recording medium, wherein
said medium records the steps of: accepting a communication information obtaining command to obtain communication information to communicate with a first server; executing said accepted communication information obtaining command to obtain the communication information from a second server; and storing said obtained communication information, in a computer-executable manner.

25. A communication information configuration method, comprising the steps of:
accepting a communication information obtaining command to obtain communication information to communicate with a first server, from said second server, at a terminal device;
executing said accepted communication information obtaining command to obtain the communication information from said second server;
storing said obtained communication information;
storing communication information obtaining command in the first server;
transmitting said stored communication information obtaining command to the terminal device;
generating the communication information;
transmitting said generated communication information to said second server;
receiving said transmitted communication information at the second server;
storing said received communication information; and
transmitting the stored communication information to said terminal device in response to a request of communication information from said terminal device.

26. A data processing method, comprising the steps of:
accepting a communication information obtaining command to obtain communication information to communicate with said first server, from said second server at a terminal device;
obtaining primary communication information for generating secondary communication information to communicate with the first server, from said first server;
transmitting said primary communication information to the second server;
executing said communication information obtaining command to obtain the secondary communication information from said second server;
storing said obtained secondary communication information;
generating the first communication information in said first server;
transmitting said generated primary communication information to said terminal device; and
transmitting said stored communication information obtaining command to the terminal device, wherein
said second server comprises the steps of receiving the primary communication information from said terminal device, generating secondary communication information based on said received primary communication information, determining transmission validity of the secondary communication information based on said received primary communication information, and transmitting the secondary communication information to said terminal based on said determination.

27. A data processing system having a terminal device, a first server, and a second server, wherein
said terminal device comprises a terminal information transmitting section that transmits terminal information having a terminal identifier to identify a terminal to said second server, an obtaining command accepting section that accepts a communication information obtaining command to obtain communication information to communicate with said first server, from said second server, a communication information obtaining section that executes the communication information obtaining command accepted by said obtaining command accepting section to obtain the communication information from said second server, and a communication information storage section that stores the communication information obtained by said communication information obtaining section,
said first server comprises a first communication information obtaining command storage section that stores the communication information obtaining command, a first terminal information receiving section that receives at least part of the terminal information transmitted from said second server, and a first communication information obtaining command transmission section that transmits the communication information obtaining command stored in said first communication information obtaining command storage section to said terminal device in the case where said first terminal information receiving section receives at least part of the terminal information, and
said second server comprises a terminal check information storage section that stores at least one piece of terminal check information having the terminal identifier, a second terminal information receiving section that receives the terminal information transmitted from said terminal information transmitting section, a second terminal information determination section that determines whether the terminal identified by the terminal identifier that the terminal information is authorized terminal from the terminal information received by said second terminal information receiving section based on at least one piece of the terminal check information stored in said terminal check information storage section, a second terminal information transmitting section that transmits at least part of said terminal information to said first server in the case of determination by said second terminal information determination section as authorized, and a second communication information transmitting section that transmits the communication information to said terminal device in response to the request of the communication information from said terminal device.

28. A terminal device that comprises the data processing system according to Claim 27.

29. A first server that comprises the data processing system according to Claim 27.

30. A second server that comprises the data processing system according to Claim 27.

31. A terminal device that transmits configuration information regarding the configuration of the terminal device itself, to a third server, said terminal device, comprising:
a configuration information storage section that stores configuration information;
a configuration information transmission order accepting section that accepts a configuration information transmission command to transmit the configuration information stored in the configuration information storage section to the third server, and
a configuration information transmitting section that executes the configuration information transmission command accepted by said configuration information transmission command accepting section, and transmits the configuration information to the third server.

32. The terminal device according to Claim 31, wherein
said configuration information transmission command contains a communication destination information containing the communication destination address of the third server.

33. A second server that makes a terminal device transmit configuration information stored in the terminal device to a third server, said second server, comprising:
a configuration information transmission command obtaining section that obtains a configuration information transmission command, which is a command to transmit the configuration information stored in the terminal device from the terminal device to the third server; and
a configuration information transmission command transmitting section that transmits the configuration information transmission command obtained by the configuration information transmission command obtaining section to the terminal device.

34. A terminal device that transmits configuration information, which is information regarding the configuration of the terminal device itself, to a third server, said terminal device, comprising:
a configuration information storage section that stores configuration information;
a configuration information transmission command accepting section that accepts a configuration information transmission command to transmit the configuration information stored in the configuration information storage section to the third server, from a second server; and
a configuration information transmitting section that executes the configuration information transmission command accepted by said configuration information transmission command accepting section, and transmits the configuration information to the third server, wherein
the configuration information transmission command is a command that the second server has obtained based on first configuration request information containing information regarding the transfer of a predetermined value.

35. The terminal device according to Claim 34, wherein
the first configuration request information is information that the third server has transmitted to the second server.

36. The terminal device according to Claim 34, wherein
the first configuration request information is information that a fourth server has transmitted to the second server.

37. A terminal device that transmits configuration information regarding the configuration of the terminal device itself, to a third server, said terminal device, comprising:
a configuration information storage section that stores configuration information;
a configuration information transmission command accepting section that accepts a configuration information transmission command to transmit the configuration information stored in the configuration information storage section to the third server, from a second server; and
a configuration information transmitting section that executes the configuration information transmission command accepted by said configuration information transmission command accepting section, and transmits the configuration information to the third server, wherein
the configuration information transmission command accepting section has accepted the command from the second server based on value information containing information regarding the transfer of a predetermined value.

38. A terminal device that transmits configuration information regarding the configuration of the terminal device itself, to a third server, said terminal device, comprising:
a configuration information storage section that stores configuration information;
a configuration information transmission command accepting section that accepts a configuration information transmission command to transmit the configuration information stored in the configuration information storage section to the third server, from a second server; and
a configuration information transmitting section that executes the configuration information transmission command accepted by said configuration information transmission command accepting section, and transmits the configuration information to the third server, wherein
the configuration information transmission command accepting section has accepted the configuration information transmission command that the second server obtained based on second configuration request information, which is a request regarding the transmission of the configuration information, from the second server.

39. The second server according to any one of Claims 33, 34 and 37, comprising:
a third server communication destination specifying information obtaining section that obtains communication destination specifying information that is information to specify the communication destination address of the third server; and
a communication destination information obtaining section that obtains communication destination information containing the communication destination address of the third server based on the communication destination information obtained by said third server communication destination specifying information obtaining section, wherein
the configuration information transmission command contains the communication destination information containing the communication destination address of the third server, which has been obtained by the communication destination information obtaining section.

40. A terminal device that transmits configuration information regarding the configuration of the terminal device itself, to a third server, said terminal device, comprising:
a configuration information storage section that stores configuration information;
a configuration information transmission command accepting section that accepts a configuration information transmission command to transmit the configuration information stored in the configuration information storage section to the third server, from a second server; and
a configuration information transmitting section that executes the configuration information transmission command accepted by said configuration information transmission command accepting section, and transmits the configuration information to the third server, wherein
the configuration information transmission command has been obtained from the second server based on information regarding the approval that the terminal device itself transmits the configuration information to the third server.

41. A terminal device that transmits configuration information, which is information regarding the configuration of the terminal device itself, to a third server, said terminal device, comprising:
a configuration information storage section that stores configuration information;
a configuration information transmission command accepting section that accepts a configuration information transmission command to transmit the configuration information stored in the configuration information storage section to the third server, from a second server and
a configuration information transmitting section that executes the configuration information transmission command accepted by said configuration information transmission command accepting section, and transmits the configuration information to the third server, wherein
the configuration information transmission command accepting section has accepted the command from the second server based on information regarding the approval that the terminal device itself transmits the configuration information to the third server.

42. A terminal device, comprising:
a terminal information transmitting section that transmits terminal information having a terminal identifier that identifies the terminal device;
a predetermined command specifying information receiving section that receives a predetermined command specifying information to specify a predetermined command;
a predetermined command specifying information transmitting section that transmits the predetermined command specifying information received by the predetermined command specifying information receiving section to a second server;
a predetermined command executing information accepting section that accepts predetermined command executing information, which is information to execute a predetermined command, from the second server based on the predetermined command specifying information transmitted from the predetermined command specifying information transmitting section; and
a predetermined command executing section that executes the predetermined command based on the predetermined command executing information accepted by said predetermined command executing information accepting section, wherein
the predetermined command specifying information received by the predetermined command specifying information receiving section is associated with the predetermined command executing information in the second server based on request information that requests execution of the predetermined command to the terminal device identified by the terminal identifier.

43. The terminal device according to Claim 42, wherein
the predetermined command is to transmit configuration information, which the terminal device itselfstores to a predetermined server.

44. The terminal device according to Claim 42, wherein
the predetermined command is to configure configuration information based on communication information to communicate with a predetermined server.
